# EUROPEAN PATENT APPLICATION

(11) **EP 0 641 744 A1**
(43) Date of publication of application: **08.03.1995**
(21) Application number: 93910328.9
(22) Date of filing: 12.05.1993
(51) Int. Cl.: C02F 3/02, C02F 3/10

(54) **PURIFYING APPARATUS**

(30) Priority: 13.05.1992 JP 120813/92
(71) Applicant: KABUSHIKI KAISHI TOYO ECO RESEARCH, Tokyo (JP)
(72) Inventor: KABUSHIKI KAISHI TOYO ECO RESEARCH, Tokyo (JP)
(74) Representative: March, Gary Clifford
(86) International application number: JP9300623
(87) International publication number: WO9323338

(57) **Abstract**

An apparatus for purifying waste water in a lake, pond, dam, river and the like by use of microorganisms carried on charcoal. A plurality of water collecting pipes (4) formed therein with a plurality of water holes (5) are provided on the bottom portion (1a) of the pond or the like covered thereover with non-water permeable members (2). Charcoal (12) carrying thereon microorganisms is spread all over the water collecting pipes (4) to thereby form a treatment layer (13). A gravel layer (15) is formed on the treatment layer (13). A storage tank (18) is provided, which has a pump (29) connected thereto with a reflux pipe (31) communicating with the upper portion of the pond (1). Water (1b) to be treated which is disposed on the bottom portion (1a) is collected through the treatment layer (13) from the water holes (5) by use of the pump (29), and discharged in the vicinity of the water surface through the water collecting pipes (4) and the reflux pipe (31). When duckweeds are generated in the vicinity of the water surface, the water (1b) to be treated in the upper portion of the water surface is discharged to the treatment layer (13) through the water holes (5) of the water collecting pipes (4) by use of the pump (29). When the water (1b) to be treated passes through the treatment layer (13), the duckweeds and the organic substances are decomposed by the microorganisms carried satisfactorily on inexpensive charcoal (12). A non-uniformity in concentration of the dissolved oxygen within the whole pond or the like is reduced, so that the purifying treatment can be effectively achieved.

## Description

### Field of the Invention

This invention relates to a purifier for purifying polluted water in a body of water, such as, a lake, a pond, a dam, a water reservoir, a river and an irrigation channel, by means of microorganisms retained by charcoal.

### Prior Art

Generally in a confined body of water where there is very little flow of the water and the water is stagnate for a long period of time, such as, a lake, a pond, a dam, a reservoir, downstream of a river and an irrigation channel, water-bloom and other algae are generated near the surface of the water where oxygen density is relatively high, while the remains of water- bloom, other algae and various living organisms decompose near the bottom of the water where oxygen density is low. As the decomposed remains accumulate on the bottom, pollution of the water progresses. Such pollution becomes prominent especially in summer, resulting in generation of a bad odor.

In order to prevent water in an confined area from becoming polluted, various purifying methods exist, including one which calls for supplying oxygen to the upper and middle layers of an confined body of water by means of a fountain and agitating the water so that water-bloom and other algae, as well as organic sludge, are decomposed by oxidation, another which utilizes filtration equipment, and another which calls for installing near the confined body of water a device having a filler layer filled with porous ceramics or other similar materials to hold micro organisms and pumping the water to flow through the device while airing the filler layer in order to promote oxidation decomposition.

A fountain or agitating the water, however, may be effective in case of a small body of confined water, such as an artificial pond in a park, but, it is extremely difficult to purify a large body of water, such as a lake or a dam, by means of oxidation decomposition carried out by microorganisms, by feeding oxygen thereto supplied by just a fountain or agitation of the water. Filtration equipment is also virtually ineffective, because it is not capable of separating soluble organic substance.

On the other hand, a purification method using an aeration type device with a filler layer requires installation of a facility on land outside the body of water. This presents a problem particularly in case of a dam or a similar site, because the inclination of the shore is often too steep to allow installation of the facility. Furthermore, in cases where porous ceramics is used as the material of the filler layer, its maximum porosity and specific surface area is limited due to manufacturing conditions and strength of porous ceramics, and, consequently, its capacity for retaining microorganisms per unit weight is also limited. It is therefore necessary to use a great quantity of porous ceramics in order to increase the total quantity of retained microorganisms, which results in making the whole device bulky.

It presents another problem in that operation and maintenance of the purification device is expensive.

A river and other channels where water flows have a self- purification system wherein organic substance contained in flowing water is decomposed by oxidation by activities of microorganisms, such as zooplanktons, phytoplanktons, various fungi, protozoa and other tiny living organisms.

However, as more sewage and other polluted water have been flowing into rivers recently, various problems including progression of pollution and generation of offensive odors have resulted even in rivers where the water flows, because self- purification alone is becoming insufficient to decompose pollutants in the flowing water, such as organic substance and the remains of plankton, other microorganisms and tiny living organisms.

Therefore, many purifying facilities are now provided near downstream of rivers. These facilities often have purifying devices similar to those installed at a confined body of water, such as a settling bath and an aeration bath filled with retaining means of microorganisms, so that some volume of polluted water is introduced into those devices and purified therein.

As pollution of water is in progress over the wide geographical area including the upstream tributaries of a river, it is extremely difficult to secure a number of sites over such a wide geographical area to build all the necessary purifying facilities which require enormous construction costs.

Another problem this presents is that operation and maintenance of the facilities is expensive.

Furthermore, installing these purifying facilities often mars the appearance of the environment.

In order to overcome the above problems, an object of the present invention is to provide a purification device which is capable of purifying polluted water, resulting in the easy, efficient and loss cost production of clear water.

### SUMMARY OF THE INVENTION

A purifier according to the present invention comprises a water collecting means having irrigation holes capable of permitting water in a body of water to be treated to flow therethrough, at least one treatment layer having charcoal for retaining microorganisms, the treatment layer being provided at least on the water collecting means, and means for circulating water in the body of water to be treated between the vicinity of the surface and the vicinity of the bottom of the body of water through the aforementioned water collecting means and the treatment layer.

With at least one treatment layer having charcoal for retaining microorganisms being provided at least on the water collecting means which is provided with irrigation holes capable of permitting water to be treated to flow therethrough, the treatment layer being secured by means for preventing the charcoal from floating, and, using the aforementioned circulating means, the water to be treated in the body of water being circulated between the vicinity of the surface and the vicinity of the bottom of the body of water through the water collecting means and the treatment layer, the water is treated by the microorganisms retained in the charcoal in the treatment layer.

Therefore, as the microorganisms are retained in charcoal, which is inexpensive and has extraordinary porosity and very large specific surface area, the quantity of microorganisms per unit weight of a retaining means is increased, and the efficiency of purification treatment is consequently improved. As charcoal is also advantageous in that it contains elements which are beneficial for retaining microorganisms in good condition, the present invention is effective in performing efficient purification treatment and improving the clarity of water to be treated by means of an inexpensive device.

As water is treated while being circulated between the surface and the bottom of a body of water by using a circulating means, the present invention is capable of reducing the differences in the dissolved oxygen concentration throughout the water in a body of water, thereby effectively performing purification treatment, even in cases where a body of water being treated is stagnant.

A purifier according to another feature of the present invention has a water collecting means provided with irrigation holes through which water in a body of flowing water to be treated is caused to flow by the natural force of the water flow, and at least one treatment layer provided with charcoal for retaining microorganisms, the treatment layer being formed at least on the water collecting means.

With at least one treatment layer having charcoal for retaining microorganisms being provided at least on the water collecting means which is provided with irrigation holes capable of permitting water to be treated to flow therethrough, and the water to be treated being caused by the natural flow of water of the body of flowing water to flow through the water collecting means and the treatment layer, the water is treated by the microorganisms retained in the charcoal in the treatment layer.

Therefore, as microorganisms are retained in charcoal, which is inexpensive and has extraordinary porosity and very large specific surface area, the quantity of microorganisms per unit weight of a retaining means is increased, and the efficiency of purification treatment is consequently improved. As charcoal is also advantageous in that it contains elements which are beneficial for retaining microorganism in good condition, the present invention is effective in performing efficient purification treatment and improving the clarity of water to be treated by means of an inexpensive device. Furthermore, as the flow of the body of water itself is utilized, the present invention is capable of economically treating the water.

A purifier according to another feature of the present invention has at least one weir for blocking the flow of water of a body of flowing water to be treated, a water passage provided through the base of the weir in order to connect the upstream side of the weir to the downstream side thereof, the water passage being provided with irrigation holes through which water in the body of flowing water to be treated flows, and at least one treatment layer provided with charcoal which covers the irrigation holes of the water passage and retains microorganisms.

As the flow of the water to be treated is blocked by the weir provided in the body of water, the water flows through the water channel, which is provided through the base of the weir in order to connect the upstream side of the weir to the downstream side thereof, and the treatment layer provided with charcoal which covers the irrigation holes and retains microorganisms, the water is treated by the microorganisms retained in the charcoal in the treatment layer.

Therefore, as microorganisms are retained in charcoal, which is inexpensive and has extraordinary porosity and very large specific surface area, the quantity of microorganisms per unit weight of a retaining means is increased, and the efficiency of purification treatment is consequently improved. As charcoal is also advantageous in that it contains elements which are beneficial for retaining microorganisms in good condition, the present invention is effective in performing efficient purification treatment and improving the clarity of water to be treated by means of an inexpensive device.

Furthermore, as the present invention treats water by means of at least one treatment layer in the body of water while utilizing flow of the body of water, the present invention does not require the separate installation of a purifying device on land or any other site outside the body of water and therefore is capable of treating the water economically.

Provided according to yet another feature of the present invention is a purifier which has the same configuration as the aforementioned device to be installed in a body of flowing water and also includes means for circulating water to be treated from downstream of the said body of water to upstream thereof.

With the configuration as above, the purifier causes water in the body of water to be circulated from downstream of the body of water to upstream thereof through the water collecting means and the treatment layer or layers, or causes treated water to be circulated from downstream of the body of water to upstream thereof.

Therefore, as water is repeatedly treated, the present invention is effective in efficiently performing purification treatment, improving the clarity of water and reducing the size of the purifying device.

### BRIEF DESCRIPTION OF THE DRAWINGS

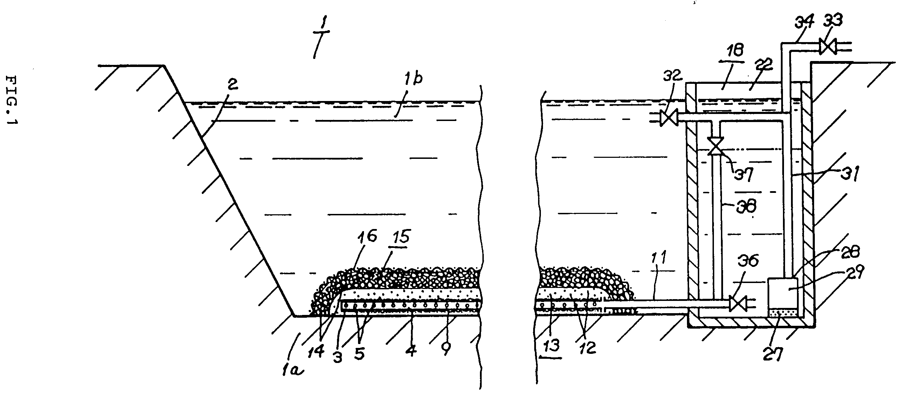

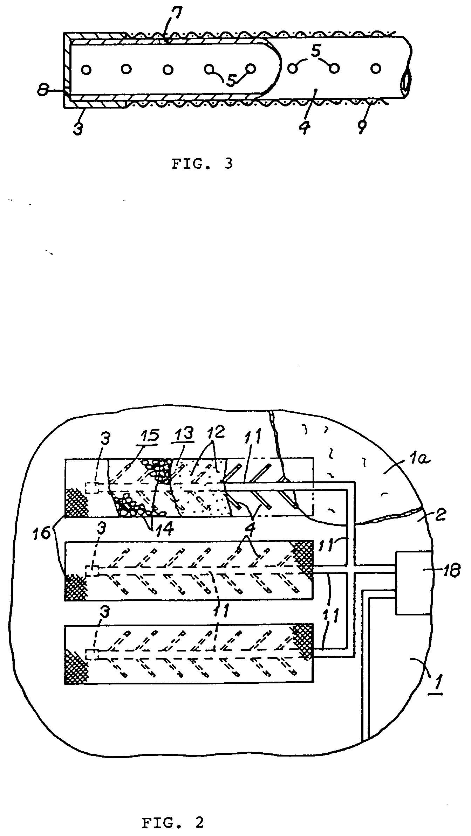

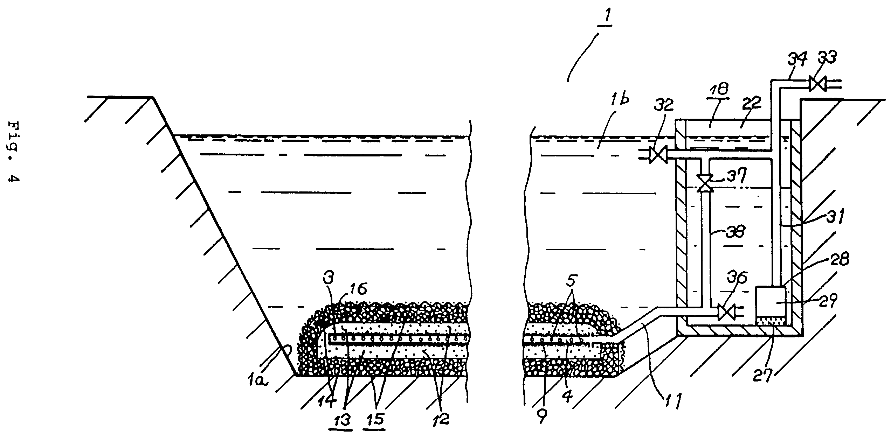

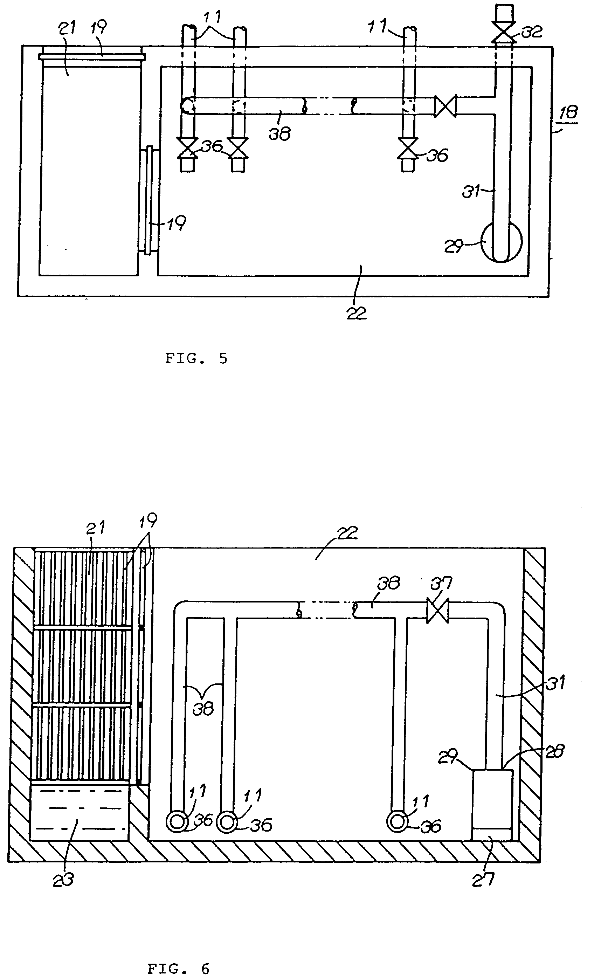

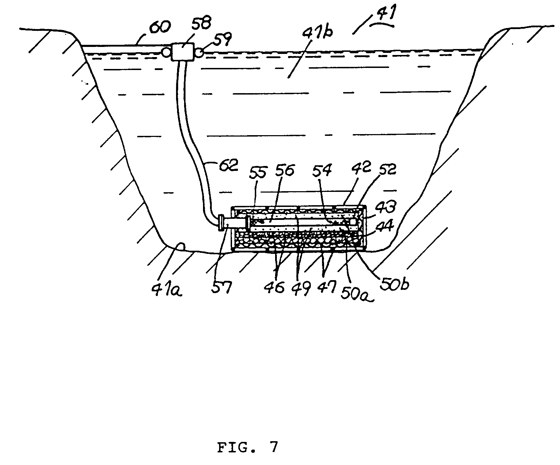

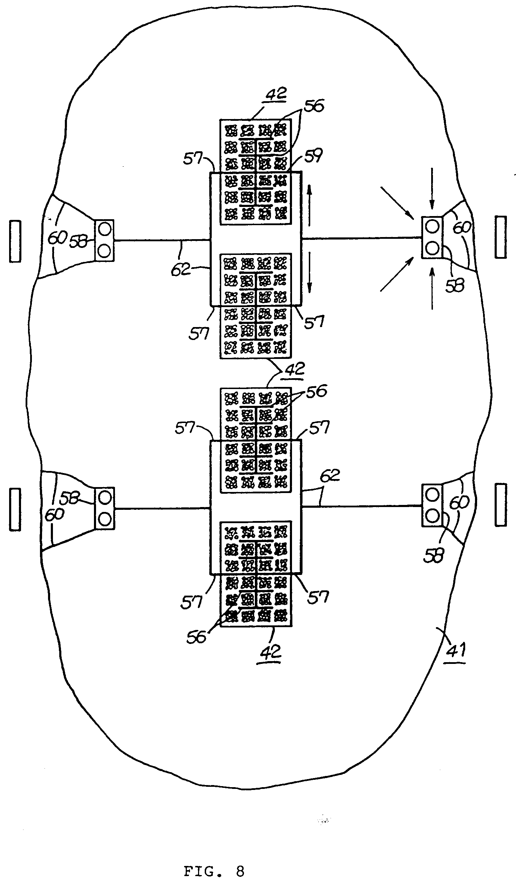

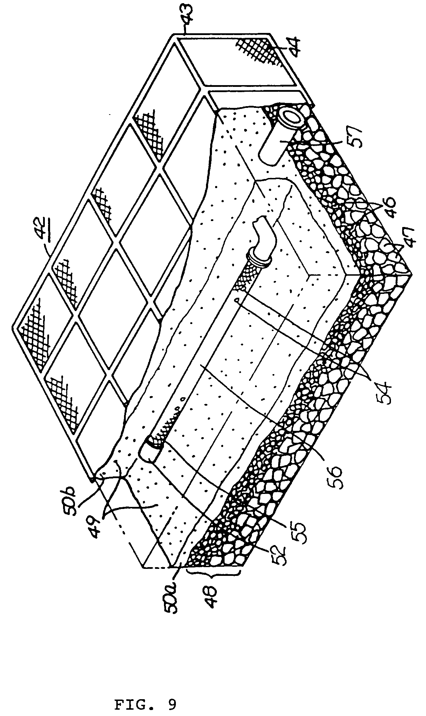

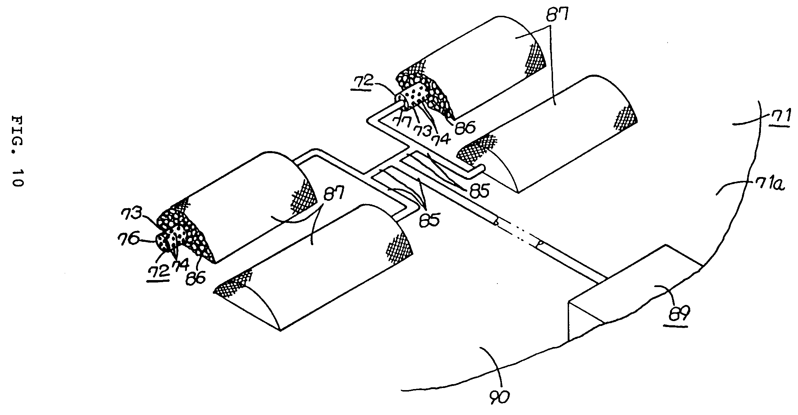

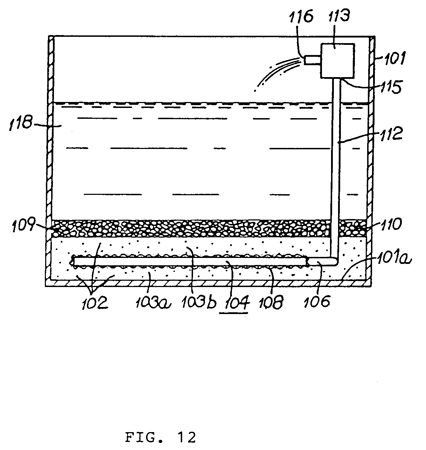

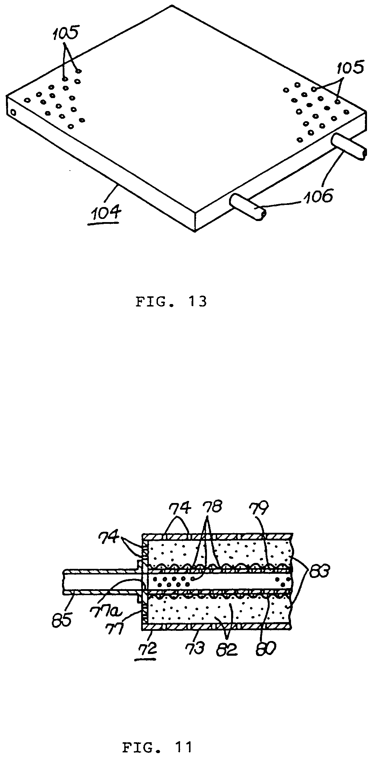

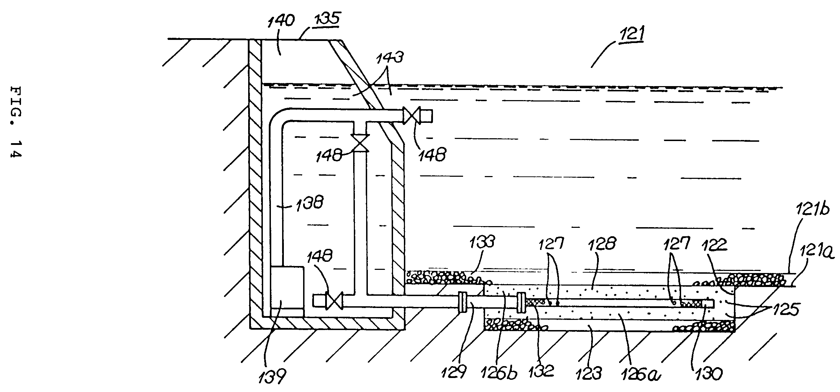

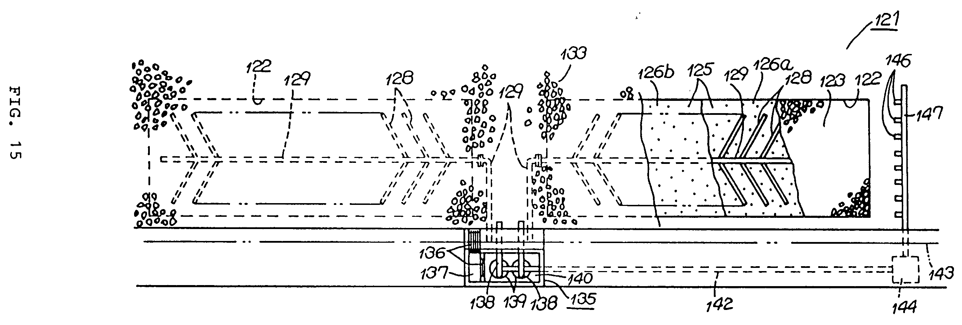

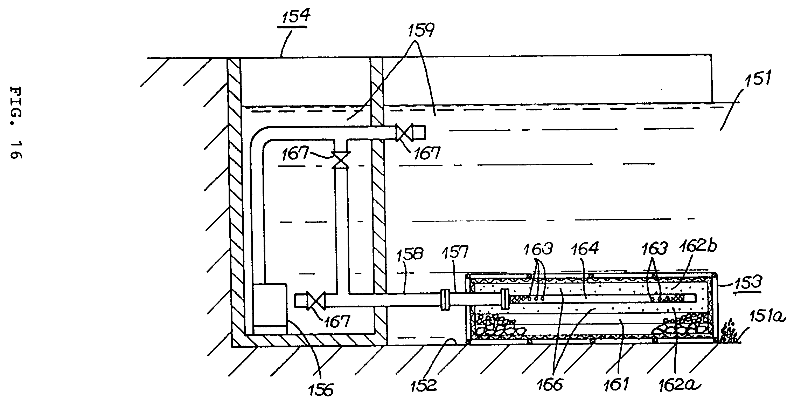

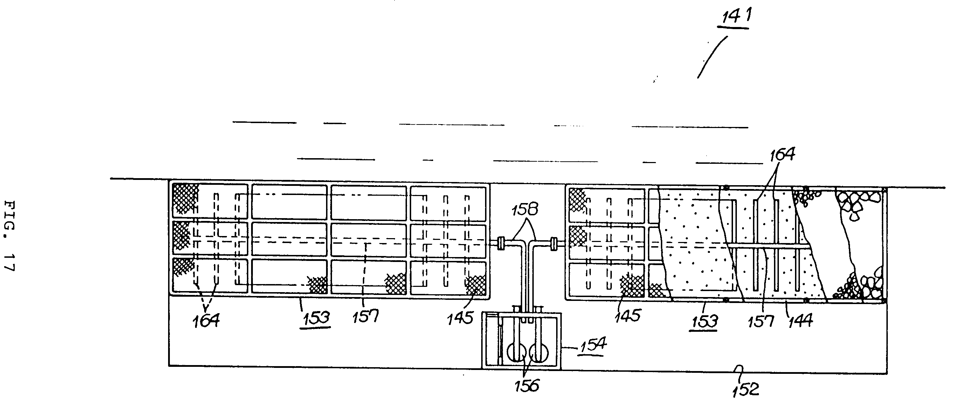

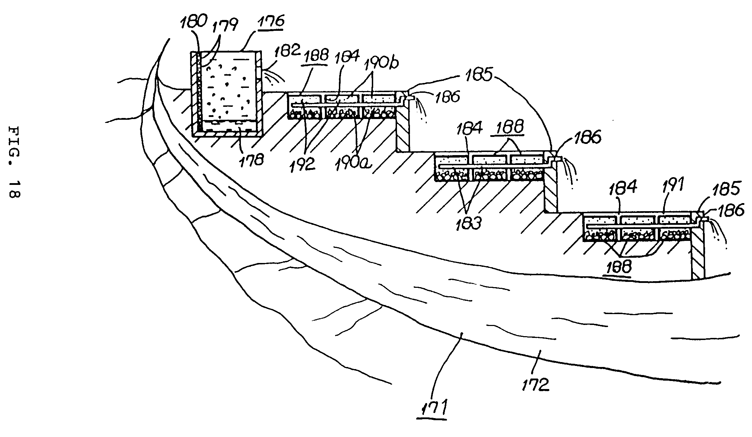

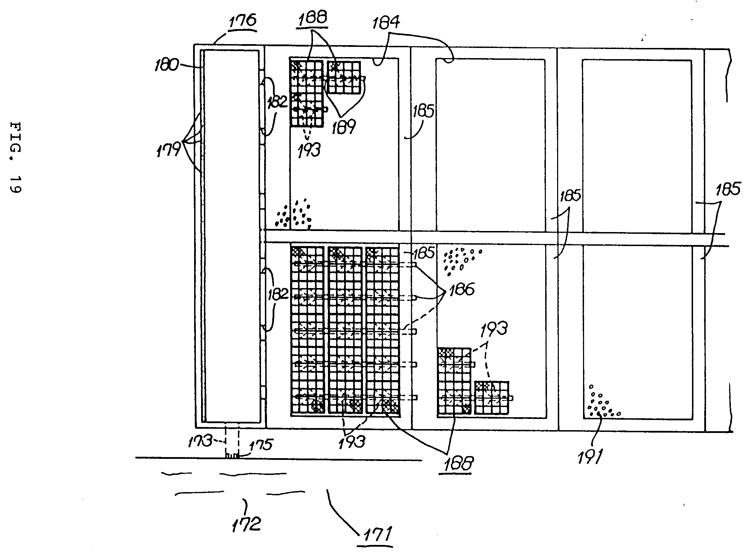

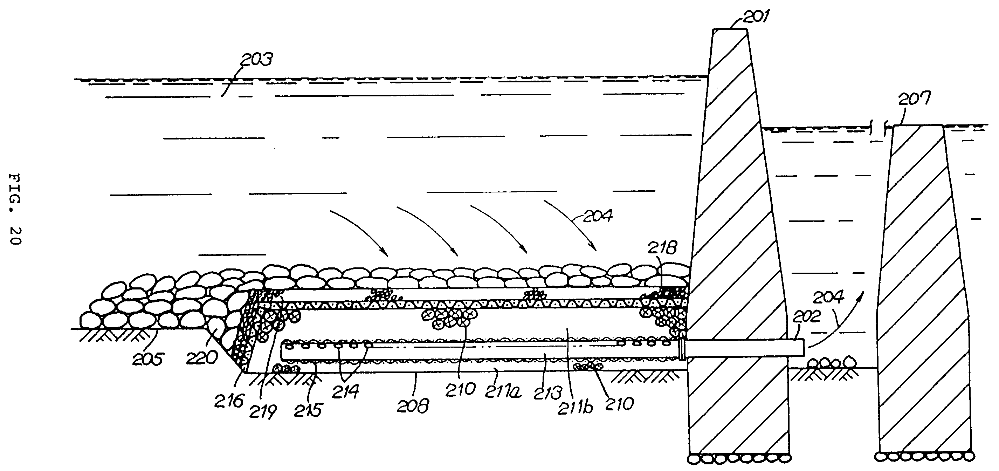

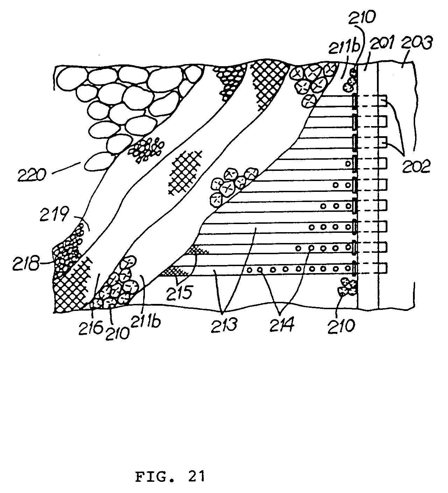

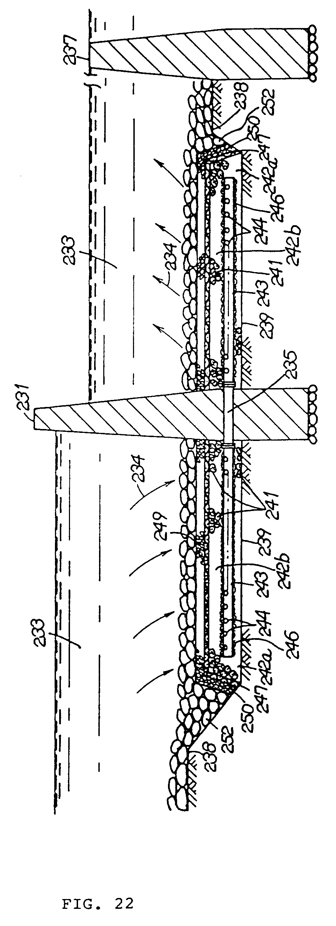

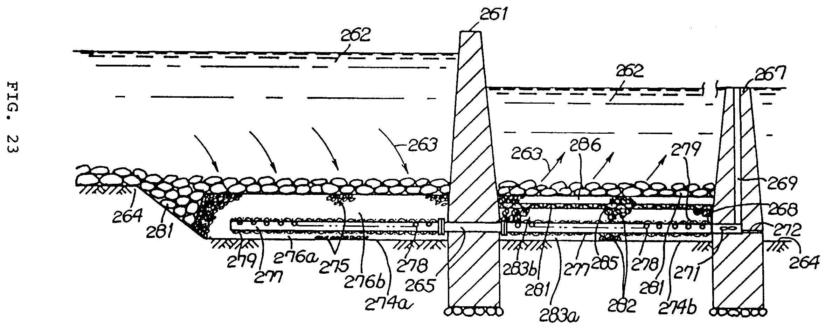

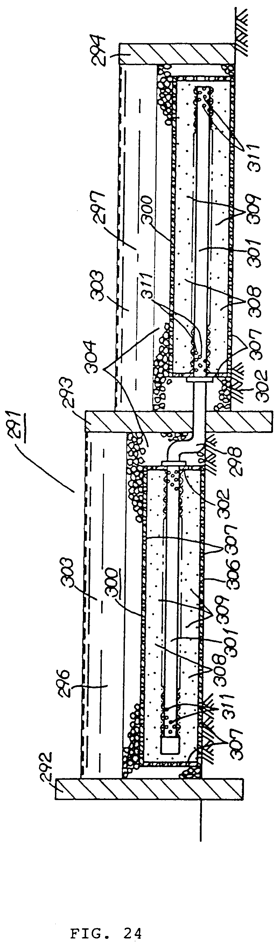

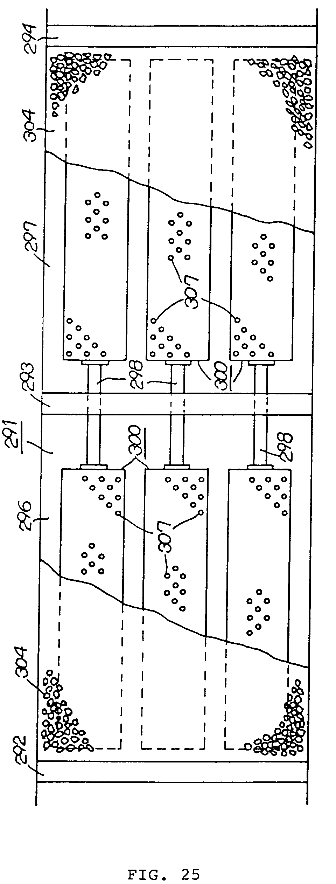

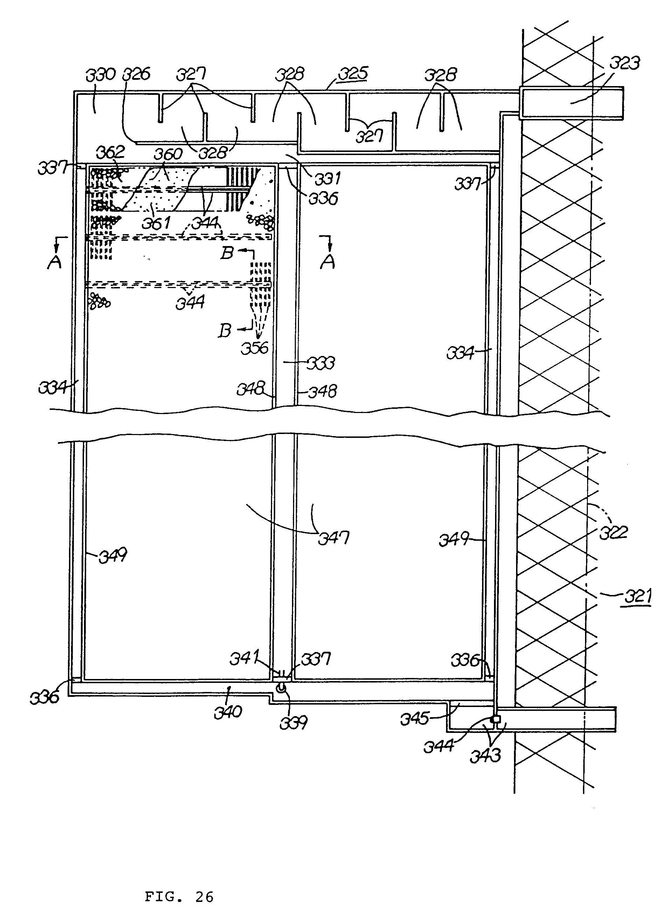

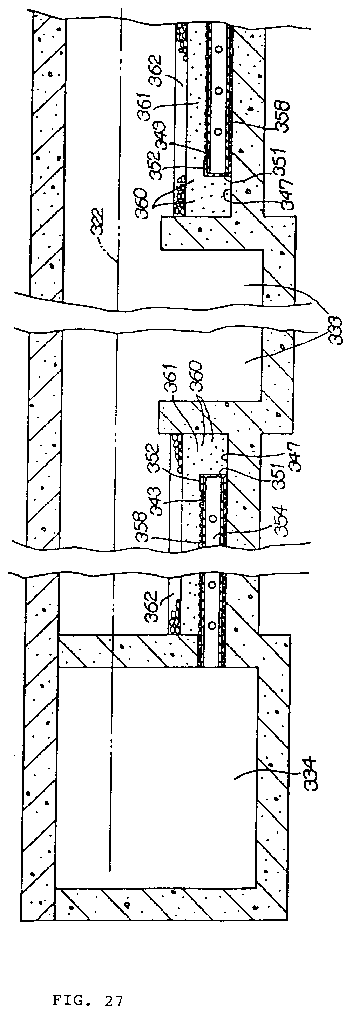

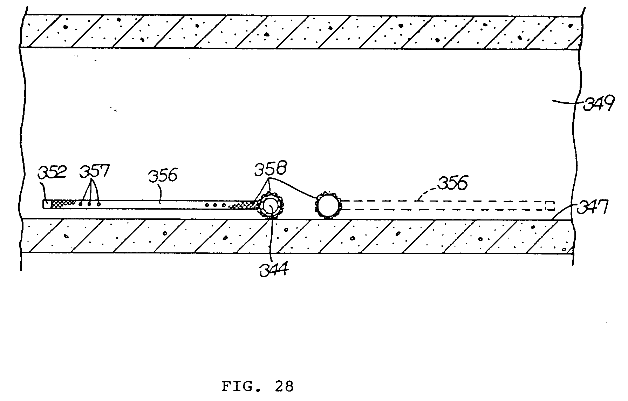

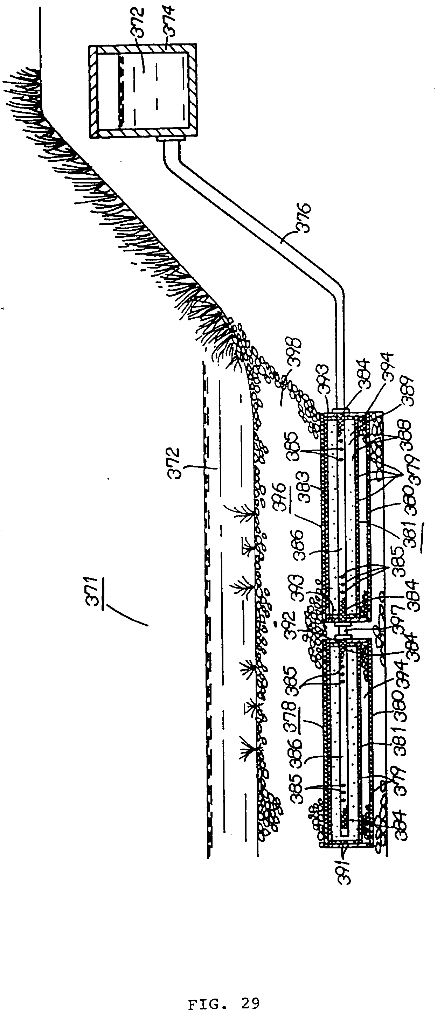

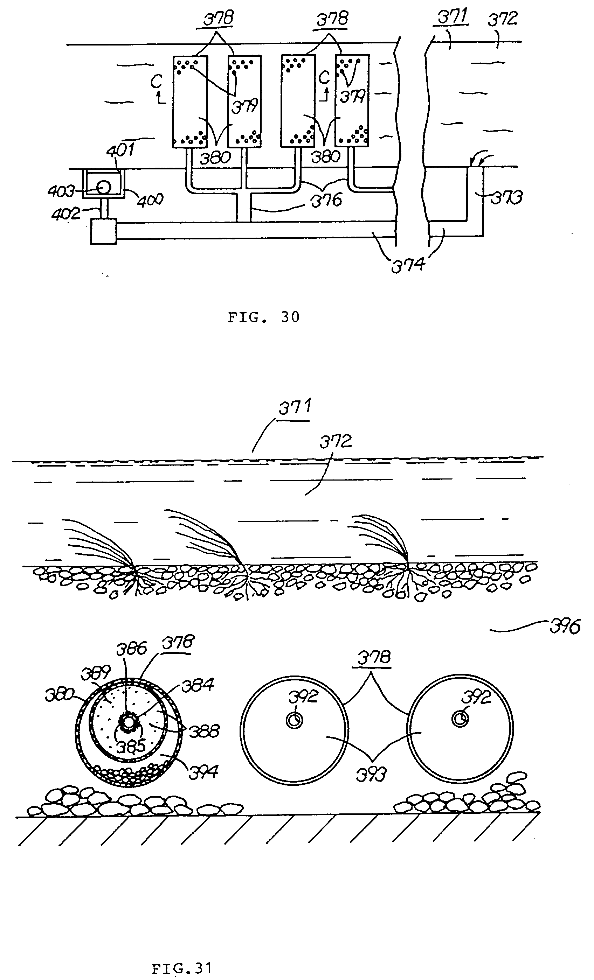

The attached drawings illustrate embodiments of the present invention. Figs. 1 to 6 show a purifier according to a first embodiment of the present invention, wherein Fig. 1 is a sectional view of an artificial pond provided with said purifier, Fig. 2 is a plan view of same, Fig. 3 is a plan view of a partially cutaway part of a water collecting pipe, Fig. 4 is a sectional view of an artificial pond provided with a purifier which has a treatment layer below the water collecting pipes, Fig. 5 is a plan view of a reservoir tank and Fig. 6 is a sectional side view of the water reservoir. Figs. 7 to 9 show a purifier according to a second embodiment of the present invention, wherein Fig. 7 is a sectional view of a dam provided with said purifier, Fig. 8 is a plan view of same and Fig. 9 is a partially cutaway oblique view of a purifying unit of same. Figs. 10 and 11 show a purifier according to a third embodiment of the present invention, wherein Fig. 10 is an oblique view of a lake provided with said purifier, and Fig. 11 is a sectional view of a part of a purifying unit of said purifier. Figs. 12 and 13 show a purifier according to a fourth embodiment of the present invention, wherein Fig. 12 is a sectional view of a water tank provided with said purifier, and Fig. 13 is an oblique view of a water collecting board of said purifier. Figs. 14 and 15 show a purifier according to a fifth embodiment of the present invention, wherein Fig. 14 is a sectional view of a river provided with said purifier, and Fig. 15 is a plan view of same. Figs. 16 and 17 show a purifier according to a sixth embodiment of the present invention, wherein Fig. 16 is a sectional view of a river provided with said purifier, and Fig. 17 is a plan view of same. Figs. 18 and 19 show a purifier according to a seventh embodiment of the present invention, wherein Fig. 18 is an oblique view of a river provided with said purifier with the part at which the purifier is installed being shown as a sectional view, and Fig. 19 is a plan view of same. Figs. 20 and 21 show a purifier according to an eighth embodiment of the present invention, wherein Fig. 20 is a sectional view of a river provided with said purifier, and Fig. 21 is a plan view of same. Fig. 22 is a sectional view of a river provided with a purifier according to a ninth embodiment of the present invention. Fig. 23 is a sectional view of a river provided with a purifier according to a tenth embodiment of the present invention. Figs. 24 and 25 show a purifier according to an eleventh embodiment of the present invention, wherein Fig. 24 is a sectional view of a river provided with said purifier, and Fig. 25 is a plan view of same. Figs. 26 to 28 show a purifier according to a twelfth embodiment of the present invention, wherein Fig. 26 is a partially cutaway plan of a river provided with said purifier, Fig. 27 is a sectional view of same taken along the line A-A of Fig. 26, and Fig. 28 is a sectional view of same taken along the line B-B of Fig. 26. Figs. 29 to 31 show a purifier according to a thirteenth embodiment of the present invention, wherein Fig. 29 is a sectional view of a river provided with said purifier, Fig. 30 is a plan of same, and Fig. 31 is a sectional view of same taken along the line C-C of Fig. 30.

### DESCRIPTION OF THE PREFERRED EMBODIMENTS

In order that the invention may be more easily understood and readily retained into effect, embodiments thereof are now described by way of non-limiting example only, referring to the accompanying drawings.

A first embodiment of the present invention is explained hereunder, referring to Figs. 1 to 3.

In Figs. 1 and 2, numeral 1 denotes a body of water which is, in case of the present embodiment, an artificial pond of a water reservoir installation or a golf course. A non-permeable member 2, such as a vinyl sheet, is laid on the entire bottom 1a of pond 1.

Disposed on non-permeable member 2 are water collecting pipes 4 serving as means for collecting water, each pipe being made of a vinyl chloride tube having a diameter between, for example, 20 and 75 mm, with one of the ends being closed by a cap 3.

A plurality of irrigation holes 5 having a diameter of, for example, about 10 mm are formed in both sides of each water collecting pipe 4 in order to permit water 1b in pond 1 to flow therethrough, irrigation holes 5 being horizontally aligned in the longitudinal direction of the pipe.

As shown in Fig. 3, each water collecting pipe 4 is also provided with an air hole 7 for permitting air and gas to escape and a drain hole 8 for permitting mud and fine sand to escape, air hole 7 bored in the upper surface of collecting pipe 4, near the area closed by cap 3, and drain hole 8 in the bottom of the end of cap 3.

A cylindrical net 9 with an inner diameter nearly the same as the outer diameter of water collecting pipe 4 is fitted around each pipe and affixed thereto in order to prevent foreign matter from plugging irrigation holes 5. Net 9 may be of approx. 5 mm meshes.

A plurality of water collecting pipes 4 described above are arranged nearly parallel with each other at specified intervals and connected through the open ends thereof to a main pipe 11 having a diameter of, for example, 150 mm in such a manner that water collecting pipes 4 form tributaries of main pipe 11.

Formed in pond 1 is a treatment layer 13 which consists of charcoal 12 having a particle size larger than the diameter of irrigation hole 5, for example, 10 to 30 mm, and being spread to a thickness of, for example, 0.2 to 0.5 m so as to cover water collecting pipes 4 wrapped in nets 9. Charcoal 12 retains microorganisms (not shown in the drawings), such as bacteria, plankton and other various aerobic bacteria. The quantity of charcoal 12 to be spread is preferably 1 kg for every ton of water to be treated 1b.

For the purpose of efficient preforming purification treatment as well as reducing resistance in collecting water, it is preferred that the cross section of each water collecting pipe 4 is nearly identical to the total area of the apertures of the plurality of irrigation holes 5 of said water collecting pipe 4 and that the cross section of main pipe 11 is nearly identical to the total of the cross sections of all water collecting pipes 4 which are connected to said main pipe 11. It is also preferable that irrigation holes 5 are bored at intervals nearly identical to the thickness of treatment layer 13 so that water 1b flow uniformly through the entire treatment layer 13.

River gravel 14 having a particle size in the order of, for example, 2 to 3 cm is spread on treatment layer 13 so as to form a gravel layer 15 to a thickness of, for example, 0.2 to 0.5 m in order to prevent charcoal 12 from floating. Furthermore, a net 16 with meshes finer than the diameter of river gravel 14 is affixed to cover the top of gravel layer 15 in order to prevent gravel layer 15 from collapsing.

Concerning means of preventing charcoal 12 from floating, providing either gravel layer 15 or net 16 achieves the same effect as in the case where both gravel layer 15 and net 16 are provided as described above.

In cases where it is difficult to cover the entire bottom 1a of pond 1 with non-permeable member 2 because the surface of bottom 1a is too rough or too large, gravel layer 15 and treatment layer 13 may be formed on bottom 1a by spreading river gravel 14 and charcoal 12 respectively as shown in Fig. 4, water collecting pipes 4 wrapped in nets 9 may be disposed on treatment layer 13, and another treatment layer 13 may be formed in order to cover water collecting pipes 4.

Numeral 18 denotes a reservoir tank which is divided into an influent chamber 21 and a pump room 22 by a straining screen 19 made of grids arranged at intervals of, for example, 5 to 10 mm for straining refuse, such as dead leaves and insect bodies.

Influent chamber 21 is further divided to have a settling chamber 23 at the bottom thereof, and another straining screen 19 is disposed at the pond-side of influent chamber 21 so that water 1b is permitted to flow between pond 1, influent chamber 21 and pump room 22 through screens 19/19.

Pump room 22 is provided with a submerged pump 29 serving as a circulating means and having an inlet port 27 and a discharge port 28 for water 1b, inlet port 27 being formed near the bottom of pump chamber 22. Discharge port 28 of submerged pump 29 is connected to a circulation pipe 31, which is so attached to the upper part of pump room 22 as to be linked through a valve 32 with the upper layer of pond 1. The upper part of circulation pipe 31 is connected to an effluent pipe 34 for discharging water 1b in pump room 22 out of pond 1. Effluent pipe 34 is provided with a valve 33 at its end.

Reservoir tank 18 is linked with main pipe 11, to which water collecting pipes 4 are connected. Main pipe 11 is provided with a valve 36 which is attached to the end thereof projecting into pump room 22.

Circulation pipe 31 in pump room 22 is connected to main pipe 11 through a by-pass pipe 38, with a valve 37 in between.

Next, the process of purification treatment using a purifier according to the first embodiment shown in Figs. 1 to 6 is explained hereunder.

First of all, cover screens 19/19 in influent chamber 21 with boards or similar means. Then, open valve 32 of circulation pipe 31 and valve 36 of main pipe 11 projecting into pump room 22 of reservoir tank 18, while closing valve 37 of by-pass pipe 38 and valve 33 of effluent pipe 34. By means of operating submerged pump 29, cause water of pump room 22 of reservoir tank 18 to flow from inlet port 27, through discharge port 28 into circulation pipe 31 and discharge it into the upper layer of pond 1.

The suction of water causes the water level in pump room 22 to become lower than that of pond 1. As a result of this difference between the water levels, water 1b flows through gravel layer 15 and treatment layer 13, is then collected into water collecting pipes 4 from irrigation holes 5 thereof and flows through main pipe 11 into pump room 22.

The apertures of valves 32/36 and the suction rate of submerged pump 29 should be so adjusted as to cause water 1b to flow at approximately 1 ∼ 4 cm/min. through the thickness of treatment layer 13 so that the water can be purified efficiently by microorganisms retained in charcoal 12.

After relatively large refuse, such as dead leaves and insect bodies, are filtered out of water 1b by gravel layer 15, suspended organic substance and soluble organic substance which cannot be removed by filtration are decomposed by microorganisms retained in charcoal 12 of treatment layer 13.

It often happens, especially in summer, that water-bloom and other algae breed under the surface of water in pond 1, dissolved oxygen in the water near the bottom of pond 1 decreases and that microorganisms retained in charcoal 12 of treatment layer 13 grow. In these cases, open influent chamber 21 by removing the boards which block screens 19/19, then close valve 32 of circulation pipe 31 as well as valve 33 of effluent pipe 34 and close valve 37 of by-pass pipe 38.

Then operate submerged pump 29 so that water 1b in pump room 22 of reservoir tank 18 is suctioned from inlet port 27 of submerged pump 29 and flows from discharge port 28 of submerged pump 29 through circulation pipe 31, by-pass pipe 38 and main pipes 11 into water collecting pipes 4 and further out of irrigation holes 5 of water collecting pipes 4 to treatment layer 13 so as to pass through the thickness of treatment layer 13 at the flow rate of 1 ∼ 4 cm/min.

When removing excessive microorganism growth from charcoal 12, have water 1b flow at a speed such that water 1b travels through the thickness of treatment layer 13 at the flow rate of at least 1 cm/min. but not so fast as to scatter up treatment layer 13 and gravel layer 15.

Meanwhile, the air which has permeated into water collecting pipes 4 together with water 1b flowing thereinto from main pipes 11 is discharged out of water collecting pipes 4 from air holes 7 formed at the top of respective water collecting pipes 4, and fine sand and mud accumulated in water collecting pipes 4 are discharged together with the water flowing from drain holes 8 formed at the bottom of respective water collecting pipes 4.

When the water level in pump room 22 becomes lower than that of pond 1 as a result of the suction of water 1b, water 1b near the surface of the water in pond 1 flows together with water-bloom and other algae through effluent chamber 21 into pump room 22.

The quantity of dissolved oxygen near the surface of the water is relatively large, and water-bloom and other algae in the neighborhood contain an especially great quantity of oxygen.

Therefore, when water 1b which contains ample oxygen flows through treatment layer 13, water-bloom, other algae, suspended organic substance and soluble organic substance are decomposed by microorganisms retained in charcoal 12.

Shown below are results of a test for comparison between water quality of an artificial pond in which water 1b has been given purification treatment in accordance with the aforementioned first embodiment of the present invention shown in Figs. 1 to 6 and water quality of an artificial pond which has nearly the same environmental conditions as said pond 1 but has not been given purification treatment, conditions of the water in the beginning of the purification treatment and at the end of three months being shown in Table 1 and conditions of the water in summer and winter sometime after the three months have passed shown in Table 2.

**Table 1**

| | Beginning of operation | At the end of 3 months |
|---|---|---|
| Water temperature (°C) | 17.8 | 18.8 |
| DO (mg/ l) | 10.5 | 6.1 |
| COD (mg/ l) | 16.9 | 2.3 |
| BOD (mg/ l) | 13 | 1.0 |
| SS (mg/ l) | 31 | <1 |
| Turbidity (Degree) | 30 | 1 |
| Total nitrogen (mg/l ) | 3.62 | 0.67 |
| Ammonia nitrogen (mg/l) | 0.73 | 0.21 |
| Nitrite nitrogen (mg/l ) | <0.01 | <0.01 |
| Nitrate nitrogen (mg/l ) | 0.05 | 0.06 |
| Organic nitrogen (mg/ ) | 2.84 | 0.40 |
| Total phosphorus (mg/l ) | 0.30 | 0.03 |
| Total organic carbon (mg/l ) | 6.7 | 2.5 |
| Chlorophyll a (mg/ l) | 11 | <0.5 |

**Table 2**

| | September | | December | |
|---|---|---|---|---|
| | Untreated | treated | Untreated | Treated |
| Water temperature (°C) | 27.3 | 24.2 | 6.2 | 7.2 |
| DO (mg/l ) | 14.5 | 7.9 | 12.0 | 10.9 |
| COD (mg/l ) | 43.7 | 3.4 | 11.0 | 1.6 |
| BOD (mg/l ) | 12 | 1.9 | 7.5 | 1.4 |
| SS (mg/l ) | 39 | <1 | 9 | <1 |
| Turbidity (Degree) | 30 | 1 | 10 | 0 |
| Total nitrogen (mg/ l) | 6.48 | 0.66 | 2.0 | 0.5 |
| Ammonia nitrogen (mg/l ) | 1.30 | 0.34 | 0.4 | 0.2 |
| Nitrite nitrogen (mg/ l) | 0.06 | <0.01 | 0.3 | <0.1 |
| Nitrate nitrogen (mg/l ) | 0.03 | 0.08 | 0.1 | <0.1 |
| Organic nitrogen (mg/l) | 5.06 | 0.24 | 1.2 | 0.3 |
| Total phosphorus (mg/ l) | 0.35 | <0.01 | 0.09 | 0.01 |
| Total organic carbon (mg/ l) | 2.4 | 2.1 | 5.5 | 3.6 |
| Chlorophyll a (mg/ l) | 27 | <0.5 | 15.8 | <0.5 |

According to Table 1 above, the purification treatment does not seem to have much effect on various pollutants including nitrogenous and phosphorous pollutants. As shown in Table 2, however, after three months of treatment, during which the microorganisms are deemed to have securely embedded in good condition in the charcoal of the treatment layer, the water has been effectively purified and clarified by microorganisms. This is evident from decrease in chlorophyll a, which indicates the presence of algae, biological oxygen demand (BOD), quantity of suspended substance (SS), nitrogenous pollutant and phosphorous pollutant as well as the turbidity of the water.

The above result shows that in summer, when water pollution tends to progress due to growth of water-bloom and other algae, the temperature of the treated water is lower than that of the untreated water. This means that water 1b near the bottom of pond 1, the temperature of which is naturally lower, circulates to the vicinity of the surface of the water.

With a configuration as above, microorganisms are retained in charcoal 12, which has extraordinary porosity and very large specific surface area and is less expensive than activated carbon. Therefore, it is possible to increase the quantity of microorganisms per unit weight of a retaining means and thus improve the efficiency of purification treatment.

Furthermore, as charcoal 12 has larger pores than those of activated carbon, it is less prone to having its pores blocked by microorganisms retained therein and capable of capturing such tiny living organisms as earthworms, in addition to organisms which can be retained in activated carbon, including bacteria, plankton and various fungi. Thus, the present embodiment is capable of improving efficiency of purification treatment using microorganisms.

As charcoal 12 contains elements necessary for biological reaction of microorganisms, such as sodium (Na), potassium (K), calcium (Ca), magnesium (Mg), iron (Fe), copper (Cu) and zinc (Zn), it is capable of retaining microorganisms in good condition and efficiently performing purification treatment.

Because charcoal 12 retains microorganisms in good condition, thereby ensuring sufficient capability to purify water 1b, the said embodiment of the present embodiment is also effective for an artificial pond 1 provided with concrete which covers its entire bottom 1a and having virtually no ability of self purification. A typical example of such artificial ponds is a pond 1 in a park.

Should inorganic pesticide or other toxic substance which cannot be decomposed by microorganisms flow into a pond 1 by accident, charcoal 12 is capable of absorbing the undesirable substance and thus protecting the ecosystem of pond 1.

Purification treatment of water 1b is performed by microorganisms retained in charcoal 12, while the water is circulated between the surface and the bottom of pond 1 by using a submerged pump 29. Therefore, even in case of a pond 1 where water 1b is stagnant, the differences in the dissolved oxygen concentration throughout the water in pond 1 is reduced, and the water is purified, with organic substance therein being decomposed efficiently. Furthermore, growth of water-bloom and other algae near the surface of the water is prevented, and the clarity of the water is improved.

As it is apparent in the configuration wherein the direction of circulation of water 1b is easily reversed by means of simply operating valves 32/36/37 according to such factors as water temperature, quantity of dissolved oxygen, growth of water-bloom and conditions of pollutants including suspended substance and organic substance, the present embodiment provides a simple, inexpensive device which is easy to operate and capable of efficient purification treatment.

As charcoal 12 is cleaned by means of reversing the direction of water circulation, with excessive microorganisms grown in charcoal 12 being removed by the reversed flow, it prevents decrease of efficiency in treating water 1b. As microorganisms separated from the charcoal is consumed by tiny living organisms and fish living in pond 1, the present embodiment is also effective in utilizing the capacity of pond 1 for self-purification.

Furthermore, as the present embodiment does not require installation of a device having a treatment layer 13 for performing purification treatment and simply calls for forming treatment layer 13 by means of spreading inexpensive material, i. e. charcoal 12, on bottom 1a of pond 1, it provides an easy-to- build, inexpensive purifier with a simple configuration. As it does not require a separate site for installation, it is applicable, with the same level of effectiveness being expected, not only to a pond 1 but any type of body of water including dams, lakes, moats, rivers, irrigation channels, canals and water tanks.

The present embodiment is also free from damaging the environmental beauty which may be otherwise caused by installation of a device outside a pond 1.

As water collecting pipes 4 are connected to submerged pump 29 with pump room 22 in between, there is no danger of submerged pump 29 being exposed to excessive load when it is initiated or terminated. Therefore, there is no need for making submerged pump 29 excessively large nor is there any danger of damage to the pump.

As fine sand and mud accumulated in water collecting pipes 4 and the air which has flowed into water collecting pipes 4 can be removed through drain hole 8 and air hole 7 which are provided in each water collecting pipe 4, the present embodiment is effective in preventing water collecting pipes 4 from being clogged and performing efficient purification treatment, by making use of the entire volume of water collecting pipes 4.

As irrigation holes 5 arranged in two horizontal lines are formed in each water collecting pipe 4 in such a manner that the said two lines are in parallel to and opposing each other and extend the longitudinal direction of water collecting pipe 4, water 1b is prevented from forming particular paths when flowing through treatment layer 13. Thus, the present embodiment permits water 1b to be evenly dispersed when flowing through treatment layer 13, thereby increasing effectiveness of contact between water 1b and microorganisms and performing efficient purification treatment.

Further, a drain hole 8 and an air hole 7 may be provided at the end of main pipe 11.

Valves 32/33/36/37 of reservoir tank 18 may be automatically operated by using electromagnetic valves or similar means to produce the same effect.

Although boards are used for blocking screens 19/19 in the above explanation, the same effect may be obtained even if a water gate or any other means which is automatically opened and closed is used.

Next, a second embodiment of the present invention is explained hereunder, referring to Figs. 7 to 9.

In Figs. 7 and 8, numeral 41 denotes a body of water which is, in case of this embodiment, a dam. A purifying unit 42 is installed at bottom 41a of dam 41.

As shown in Fig. 9, purifying unit 42 is provided with a lattice unit 43 made of such noncorrosive members as stainless steel or vinyl chloride, reinforcing bars which are made noncorrosive, or any other suitable material, each surface of lattice unit 43 being formed into an approximately rectangular- shaped lattice. A net 44 with fine meshes is spread on the inner surface of lattice unit 43 in the same manner as net 16 of the first embodiment shown in Figs. 1 to 6.

Spread on the bottom of net 44 are river gravel 46 and small rocks 47 in order to form a gravel layer 48 for preventing purifying unit 42 from floating.

Formed on gravel layer 48 in the same manner as the first embodiment shown in Figs. 1 to 6 is a lower treatment layer 50a which consists of charcoal 49 having a particle size in the range of, for example, 10 to 50 mm, and being spread to a thickness of, for example, 0.2 to 0.5 m. Charcoal 49 retains microorganisms, such as bacteria, plankton and various aerobic bacteria.

In the same manner as water collecting pipes 4 of the first embodiment, a plurality of cylindrical water collecting pipes 56, which are arranged at specified intervals and connected to each main pipe 57, are disposed on lower treatment layer 50a and serve as means for collecting water. Each water collecting pipe 56 is covered with a net 55, closed at one end with a cap 52, and provided with a drain hole and an air hole, both of which are not shown in the drawings, and a plurality of irrigation holes 54 which are bored in both horizontally extended sides of each pipe.

In the same manner as lower treatment layer 50a, charcoal 49 retaining microorganisms therein is spread to a thickness of, for example, 0.2 to 0.5 m so as to cover water collecting pipes 56, thereby forming an upper treatment layer 50b. Purifying unit 42 is thus formed, with one end of each main pipe 57 projecting from a side thereof.

Purifying unit 42 is affixed to bottom 41a of dam 41 by anchors (not shown) or similar means.

In order to prevent river gravel 46 and charcoal 49 from spilling out, net 44 of purifying unit 42 is of meshes finer than the particle sizes of river gravel 46 and charcoal 49.

In cases where gravel layer is formed on bottom 41a of dam 41, bottom 41a is formed with concrete or where non-permeable member, such as a vinyl sheet, is spread on bottom 41a, it is not necessary for purifying unit 42 to include a gravel layer 48 and lower treatment layer 50a.

Numeral 58 denotes a submerged pump serving as a circulation means, which is capable of reversing the direction of suction and discharge of water to be treated 41b. With a styrofoam member, a buoy, an air bladder or any other suitable member for serving as a float 59 being attached thereto, submerged pump 58 is in a floating position and moored to the bank of dam 41 by a rope 60 or any other suitable means.

Connected to one of the inlet/discharge ports (not shown) of submerged pump 58 is an end of a flexible circulation pipe 62, the other end of which is connected to main pipe 57 projecting from the side of purifying unit 42.

The other inlet/discharge port (not shown) of submerged pump 58 is open near the surface of the water.

Next, the process of purification treatment by using a purifying device for an enclosed body of water according to the second embodiment described above is explained hereunder.

First of all, by operating submerged pump 58, cause water 41b in water collecting pipes 56 of purifying unit 42 to flow through circulation pipe 62 into the inlet/discharge port connected to circulation pipe 62, and discharge the water from the inlet/discharge port which is open near the surface of the water, into the upper layer of dam 41.

This suction of water causes water 41b at bottom 41a of dam 41 to flow through gravel layer 48, lower treatment layer 50a and upper treatment layer 50b and be collected into water collecting pipes 56 from irrigation holes 54. Then, water 41b further flows through main pipe 57 and circulation pipe 62 into submerged pump 58.

The suction rate of submerged pump 58 as well as the diameters of water collecting pipes 56 and irrigation holes 54 should be so adjusted or determined as to cause water 41b to flow at approximately 1 ∼ 4 cm/min. through the thickness of lower treatment layer 50a or upper treatment layer 50b so that the water is purified efficiently by microorganisms retained in charcoal 49.

With suspended organic substance and soluble organic substance being decomposed by microorganisms retained in charcoal 49 in lower and upper treatment layers 50a/50b, water 41b is purified.

It often happens, especially in summer, that water-bloom and other algae breed under the surface of water in dam 41, dissolved oxygen in the water near the bottom of pond 1 decreases and that microorganisms retained in charcoal 49 of lower and upper treatment layers 50a/50b grow. In these cases, operate submerged pump 58 in order to suction water 41b near the surface of the water in dam 41. Then, cause the suctioned water to be discharged from the inlet/discharge port connected to circulation pipe 62, flow through circulation pipe 62 and main pipe 57 into water collecting pipes 56 and be discharged from irrigation holes 54 of water collecting pipes 56 into lower treatment layer 50a and upper treatment layer 50b.

When removing excessive microorganism growth from charcoal 49, have water 41b flow out of purifying unit 42 at such a speed as not to damage the unit.

Meanwhile, the air which has flowed into water collecting pipes 56 together with water 41b flowing thereinto is discharged out of water collecting pipes 56 from air holes (not shown) formed at the top of water collecting pipes 56, and fine sand and mud accumulated in water collecting pipes 56 is discharged from drain holes (not shown) formed at the bottom of water collecting pipes 56.

The quantity of dissolved oxygen near the surface of the water is relatively large, and water-bloom and other algae in the neighborhood contain especially a great quantity of oxygen.

Therefore, when water 41b which contains ample oxygen flows through lower and upper treatment layers 50a/50b, water-bloom, other algae, suspended organic substance and soluble organic substance are decomposed by microorganisms retained in charcoal 49.

With a configuration as above, in the same manner as the first embodiment shown in Figs. 1 to 6, microorganisms are retained in charcoal 49, which has extraordinary porosity and very large specific surface area and is less expensive than activated carbon. Therefore, it is possible to increase the quantity of microorganisms per unit weight of its retaining means and thus improve the efficiency of purification treatment.

Furthermore, as charcoal 49 has larger pores than those of activated carbon, it is less prone to having its pores blocked by microorganisms contained therein and capable of retaining tiny living organisms in addition to organisms small enough to be retained in activated carbon, such as bacteria, plankton and various fungi. It is thus capable of improving efficiency of purification treatment by microorganisms.

As charcoal 49 contains elements necessary for biological reaction of microorganisms, such as sodium (Na), potassium (K), calcium (Ca), magnesium (Mg), iron (Fe), copper (Cu) and zinc (Zn), it is capable of retaining microorganisms in good condition and efficiently performing purification treatment.

Should inorganic pesticide or industrial waste which has not been sufficiently treated flow into a dam 41 by accident, charcoal 49 is capable of absorbing such undesirable substance and thus protecting the ecosystem of dam 41.

Purification treatment of water 41b is performed by microorganisms retained in charcoal 49, while the water is circulated between the surface and the bottom of dam 41 using a submerged pump 58. Therefore, even in case of a dam 41 where water 41b is stagnant, the differences in the dissolved oxygen concentration throughout the water in dam 41 is reduced, and the water is purified, with organic substance therein being decomposed efficiently. Furthermore, growth of water-bloom and other algae near the surface of the water is prevented, and the clarity of the water is improved.

As it is apparent in the configuration wherein the direction of circulation of water 41b is easily reversed by means of simply reversing the direction of suction and discharge of submerged pump 58 according to such factors as water temperature, quantity of dissolved oxygen, growth of water-bloom and conditions of pollutants including suspended substance and organic substance, the present embodiment provides a simple, inexpensive device which is easy to operate and capable of efficient purification treatment.

Furthermore, decrease in the efficiency of treating water 41b can be prevented by cleaning charcoal 49 by means of reversing the direction of water circulation, thereby removing excessive microorganism growth in charcoal 49.

Even in cases where it is difficult to cover the entire area of bottom 41a of dam 41 with gravel layer 15 and treatment layer 13 as in the first embodiment, or in cases where it is difficult to provide a reservoir tank 18, it is sufficient to separately build a purifying unit 42 wherein inexpensive charcoal 49 is spread to form lower and upper treatment layers 50a/50b and submerge purifying unit 42 onto bottom 41a of dam 41, with circulation pipe 62 attached to submerged pump 58 being connected to the unit. Thus, the present embodiment provides an easy-to- build, inexpensive purifier which has a simple configuration and does not require a separate site for installation nor damages the environmental beauty which may be otherwise caused by installation of a device outside a dam 41.

As submerged pump 58 floats on the surface of water, the present embodiment is capable of treating water 41b utilizing circulation of water even in case of dams 41, agricultural water reservoirs or the like where fluctuation of the water level is too drastic to install a reservoir tank 18 as shown in the first embodiment. Thus, the present embodiment is applicable, with the same level of effectiveness being expected, not only to a dam 41 but any type of body of water including lakes, moats, rivers, irrigation channels, canals and water tanks.

As water collecting pipes 56 are provided with drain holes and air holes, the present embodiment is effective in removing fine sand and mud accumulated in water collecting pipes 56 and the air which has flowed into water collecting pipes 56, thereby performing efficient purification treatment.

As irrigation holes 54 arranged in two horizontal lines are formed in each water collecting pipe 56 in such a manner that the said two lines are parallel to and opposing each other and extend the longitudinal direction of water collecting pipe 56, water 41b is almost evenly dispersed when flowing through lower and upper treatment layers 50a/50b, thereby performing efficient purification treatment.

Next, a third embodiment of the present invention is explained hereunder, referring to Figs. 10 and 11.

In Fig. 10, numeral 71 denotes a body of water which is, in case of the present embodiment, a lake. At least one purifying unit 72 is installed on bottom 71a of lake 71.

As shown in Figs. 10 and 11, purifying unit 72 comprises a cylindrical tube 73 which has a diameter of, for example, 50 cm and is made of, for example, such a non-corrosive material as stainless steel or vinyl chloride, or a steel plate that has been given non-corrosion treatment beforehand. Numerous holes 74 are bored in the cylindrical surface of tube 73.

An end of purifying unit 72 is blocked with an end plate 76 having numerous holes 74 bored therethrough. Purifying unit 72 is also provided with, at the other end thereof, an annular end plate 77 having an approximately circular through hole 77a bored at the center thereof and numerous holes 74 all over the rest of the disk.

Disposed along the longitudinal central axis of tube 73 is a water collecting pipe 79 serving as means for collecting water. In the same manner as the first embodiment shown in Figs. 1 to 6, water collecting pipe 79 is a tube of a diameter between 20 and 75 mm and made of vinyl chloride or the like and is provided with, in the cylindrical surface thereof, a plurality of irrigation holes 78 having a diameter of, for example, approximately 10 mm. One end of water collecting pipe 79 is closed by a cap which is not shown in the drawings. In the same manner as the first embodiment, a cylindrical net 80 of approximately 5 mm meshes is fitted around water collecting pipe 79 and affixed thereto in order to prevent irrigation holes 78 from being clogged by foreign substance.

As water collecting pipe 79 is disposed in such a manner that the inner edge of the end which is not blocked by the cap is flush with the edge of through hole 77a of annular end plate 77, purifying unit 72 is so formed as to have a double-tube structure.

A treatment layer 83 is formed between tube 73 and water collecting pipe 79 of purifying unit 72 in the same manner as the first embodiment shown in Figs. 1 to 6, by means of filling the space between tube 73 and water collecting pipe 79 with charcoal 82 having a particle size ranging, for example, from 10 to 50 mm in order to retain bacteria, planktons and various aerobic bacteria.

In order to prevent charcoal 82 from spilling out, the diameter of holes 74 of tube 73 is smaller than the particle size of charcoal 82, or tube 82 may have a fine meshed configuration similar to net 80 fitted around water collecting pipe 79.

A suitable number of purifying units having the configuration as above are connected to a main pipe 85 and disposed on bottom 71a of lake 71 in such a manner that the inner edge of main pipe 85 is flush with the edge of through hole 77a of each corresponding annular end plate 77, to which an end of water collecting pipe 79 is connected.

In the same manner as the first embodiment shown in Figs. 1 to 6, it is preferred that the cross section of each water collecting pipe 79 is nearly identical to the total area of the apertures of the plurality of irrigation holes 78 of said water collecting pipe 79 and that the cross section of main pipe 85 is nearly identical to the total of the cross sections of all water collecting pipes 79 which are connected to said main pipe 85. It is also preferable that irrigation holes 78 are bored at intervals nearly identical to the thickness of treatment layer 83.

Formed on each purifying unit 72 disposed on bottom 71a of lake 71 is a gravel layer 86 consisting of river gravel and pebbles which cover purifying unit in order to prevent it from floating. Furthermore, a net 87 with meshes finer than the particle size of the river gravel and pebbles is secured on gravel layer 86 in order to prevent gravel layer 86 from collapsing.

Concerning means of securing purifying unit 72, the same effect can be achieved by using either gravel layer 86 or net 87, or using an anchor or similar means of affixing purifying unit 72 in place of using gravel layer 86 or net 87.

Numeral 89 denotes a reservoir tank which is provided with a submerged pump (not shown) serving as means of circulating water in the same manner as the first embodiment shown in Figs. 1 to 6.

Main pipe 85, to which purifying units 72 are connected, is connected to the bottom of reservoir tank 89 so as to permit water to flow therethrough.

In cases where it is difficult to provide reservoir tank 89, in the same manner as the second embodiment shown in Figs. 7 to 9, a submerged pump, which serves as means of circulating water and is provided with a float, may be floated on the surface of water, with water collecting pipes of purifying units being connected to the pump through a flexible circulation pipe.

Next, the process of purification treatment by using a purifier according to the third embodiment described above is explained hereunder.

First of all, cover the screens (not shown) of reservoir tank 89 and operate the submerged pump (not shown) in reservoir tank 89 in order to suction water 90 in reservoir tank 89 in the same manner as the first embodiment shown in Figs. 1 to 6 and discharge the suctioned water into the upper layer of lake 71.

This suction of water causes the water level in reservoir tank 89 to become lower than that of lake 71. As a result of this difference between the water levels, water 90 in lake 71 flows through gravel layers 86 into holes 74 of tubes 73. From holes 74, water 90 further flows through treatment layers 83, is collected into water collecting pipes 74 through irrigation holes 78 and further into reservoir tank 89 through main pipe 85.

Necessary adjustment, such as adjusting the apertures of valves (not shown) in reservoir tank 89 as well as the suction rate of the submerged pump, is conducted so as to cause water 90 to flow at approximately 1 ∼ 4 cm/min. through the thickness of treatment layers 83 in the same manner as the first embodiment shown in Figs. 1 to 6 so that the water can be purified efficiently by microorganisms retained in charcoal 82.

After relatively large refuse, such as dead leaves and insect bodies, are filtered out of water 90 by gravel layers 86, suspended organic substance and soluble organic substance which cannot be removed by filtration are decomposed by microorganisms retained in charcoal 82.

It often happens, especially in summer, that water-bloom and other algae breed under the surface of water in lake 71, dissolved oxygen in the water near bottom 71a of lake 71 decreases and that microorganisms retained in charcoal 82 of treatment layers 83 grow. In these cases, in the same manner as the first embodiment shown in Figs. 1 to 6, open the screens of reservoir tank 89, operate the valves and actuate the submerged pump.

Thus suction water 90 in reservoir tank 89 in order to have it flow through main pipe 85 into water collecting pipes 79 of purifying units 72 and further out of irrigation holes 78 of water collecting pipes 79 to treatment layers 83 so as to pass through the thickness of treatment layers 83 at the flow rate of 1 ∼ 4 cm/min.

When removing excessive microorganism growth from charcoal 82, have water 90 flow out of purifying unit 72 at such a speed as not to damage the unit.

When the water level in reservoir tank 89 becomes lower than that of lake 71 as a result of the suction of water 90, water 90 near the surface of the water in lake 71 flows together with water-bloom and other algae into reservoir tank 89.

The quantity of dissolved oxygen near the surface of the water 90 is relatively large, and water-bloom and other algae in the neighborhood contain especially a great quantity of oxygen.

Therefore, when water 90 which contains ample oxygen flows through treatment layers 83, water-bloom, other algae, suspended organic substance and soluble organic substance are decomposed by microorganisms retained in charcoal 82.

Charcoal 82 has extraordinary porosity and very large specific surface area and also contains elements necessary for biological reaction of microorganisms, such as sodium (Na), potassium (K), calcium (Ca), magnesium (Mg), iron (Fe), copper (Cu) and zinc (Zn). Therefore, in the same manner as the first embodiment shown in Figs. 1 to 6, the present embodiment is capable of increasing the quantity of microorganisms per unit weight of its retaining means, retaining microorganisms in good condition and thus improving the efficiency of purification treatment.

Furthermore, as charcoal 82 has larger pores than those of activated carbon, it is less prone to having its pores blocked by microorganisms retained therein and capable of capturing tiny living organisms in addition to organisms small enough to be retained in activated carbon, such as bacteria, plankton and various fungi, and therefore improving efficiency of purification treatment by using these organisms.

Should inorganic pesticide or industrial waste which has not been sufficiently treated flow into a lake 71 by accident, charcoal 82 is capable of absorbing such undesirable substance and thus protecting the ecosystem of lake 71.

Purifying treatment of water 90 is performed by microorganisms retained in charcoal 82 of treatment layers 83, while the water is circulated between the surface and the bottom of lake 71 using a submerged pump. Therefore, even in case of a lake 71 where water 90 is stagnant, the differences in the dissolved oxygen concentration throughout the water in lake 71 is reduced, and the water is purified, with organic substance therein being decomposed efficiently. Furthermore, growth of water-bloom and other algae near the surface of the water is prevented, and the clarity of the water is improved.

The present embodiment is capable of efficient purification treatment, because the direction of circulation of water 90 can be reversed according to such factors as water temperature, quantity of dissolved oxygen, growth of water-bloom and conditions of pollutants including suspended substance and organic substance. Further, the direction of circulation of water can be easily reversed by means of simply operating valves or similar devices. Therefore, the present invention provides a simple, inexpensive device which is easy to operate.

Furthermore, decrease in the efficiency of treating water 90 can be prevented by cleaning charcoal 82 by means of reversing the direction of water circulation, thereby removing excessive microorganisms grown in charcoal 82.

As purifying unit 72 has a double-tube structure which simply comprises tube 73 and water collecting pipe 79, with the space therebetween being filled with charcoal 82 that retains microorganisms, purifying unit 72 can be produced easily and inexpensively according to the present embodiment.

Even in cases it is difficult to cover the entire area of bottom 71a of lake 71 with gravel layers 86 and treatment layers 83 as in the first embodiment shown in Figs. 1 to 6, or in cases where it is difficult to secure relatively flat land on bottom 71a of lake 71 large enough to install purifying units 72 thereon, it is sufficient to submerge purifying units 72 onto bottom 71a of lake 71 and connect them to a reservoir tank 89 or a submerged pump provided with a float.

Thus, the present embodiment provides an easy-to-build, inexpensive purifier which has a simple configuration and does not require a separate site on land for installation of a purifying device having a treatment layer 83 nor damages the environmental beauty which may be otherwise caused by installation of a device outside a lake 71. The present embodiment is applicable not only to a lake 71 but any type of body of water where the water tends to become stagnant, for example, dams, water reservoirs, moats, canals and water tanks.

Next, a fourth embodiment of the present invention is explained hereunder, referring to Figs. 12 and 13.

In Fig. 12, numeral 101 denotes a body of water which is, in case of this embodiment, a water tank. A lower treatment layer 103a which consists of charcoal 102 for retaining microorganisms (not shown), such as bacteria, planktons and various aerobic bacteria is formed on bottom 101a of water tank 101. Charcoal 102 has a particle size in the range of, for example, 10 to 50 mm and is spread to a thickness of, for example, 20 to 50 cm.

Disposed on lower treatment layer 103a as shown in Fig. 13, is a water collecting board 104 serving as a water collecting means, water collecting board 104 being made of synthetic resin in the shape of a hollow plate smaller than bottom 101a of water tank 101. An upper treatment layer 103b is formed on water collecting board 104 by means of covering water collecting board 104 with charcoal 102 in the same manner as lower treatment layer 103a, charcoal 102 having a particle size in the range of, for example, 10 to 30 mm and being spread to a thickness of, for example, 5 to 30 cm.

A plurality of irrigation holes 105, which have a diameter of approximately 5 mm and are connected to the hollow inside of water collecting board 104 are bored in the lower and upper surfaces of water collecting board 104. A plurality of cylindrical main pipes 106 are attached to a side of water collecting board 104 at specified intervals in such a manner that main pipes are linked into the hollow inside of water collecting board 104 and project outward in the direction approximately perpendicular to the surface of the side to which main pipes 106 are attached.

In the same manner as the first embodiment shown in Figs. 1 to 6, it is preferred that the total area of the apertures of the plurality of irrigation holes 105 is nearly identical to the total cross section of main pipes 106 connected to water collecting board 104. It is also preferable that irrigation holes 105 are bored at intervals nearly identical to the thickness of lower and upper treatment layers 103a/103b.

A net 108 of approximately 5 mm meshes is provided so as to cover water collecting board 104 in order to prevent irrigation holes 105 from being clogged by charcoal 102 or foreign substance.

Spread to a thickness of 20 to 50 mm on upper treatment layer 103b is gravel 109 having a particle size in the range of, for example, 2 to 10 mm in order to form a gravel layer 110 for preventing charcoal 102 from floating.

Numeral 112 denotes a circulation pipe which is arranged perpendicular to the bottom of water tank 101, with an end thereof being connected to main pipe 106 of water collecting board 104 and the other end thereof located above the surface of the water.

A pump 113 serving as a circulation means is attached to the end of circulation pipe 112. Pump 113 is disposed above the water and provided at its bottom with an inlet port 115, which is attached to the upper end of circulation pipe 112. Pump 113 is also provided with a discharge port 116 at its side.

Further, in order to prevent lower and upper treatment layers 103a/103b from being exposed to sunlight and other light, it is preferred to give non transparency treatment, such as applying non transparent paint or covering the parts with non transparent members, to the lower part of the side panels of water tank 101.

Next, the process of purification treatment by using a purifier according to the fourth embodiment described above is explained hereunder.

First of all, by means of operating pump 113, suction water 118 in water collecting board 118 so that water flows through main pipes 106 and circulation pipe 112 into inlet port 115 and then discharged from outlet port 116, which is open above the surface of the water. The discharge of the water mixes air in the water to be treated and also crushes scum which has been formed on the surface of water 118 so that the crushed scum is suspended in water 118.

As a result of this suction of the water, water 118 near bottom 101a of water tank 101 flows through gravel layer 110, lower treatment layer 103a and upper treatment layer 103b and further into irrigation holes 105. Through irrigation holes 105, water 118 is collected in water collecting board 104 and flows into pump 113 through main pipes 106 and circulation pipe 112.

In the same manner as the first embodiment shown in Figs. 1 to 6, necessary adjustment, such as adjusting the suction rate of pump 113 and setting the sizes of water collecting board 104 and irrigation holes 105 beforehand, is made so that water 118 flows at approximately 1 ∼ 4 cm/min. through the thickness of lower treatment layer 103a or upper treatment layer 103b.

With suspended organic substance and soluble organic substance being decomposed by microorganisms retained in charcoal 102 in lower and upper treatment layers 103a/103b, water 118 is purified.

With the configuration as above, in the same manner as the first embodiment shown in Figs. 1 to 6, microorganisms are retained in charcoal 102, which has extraordinary porosity and very large specific surface area. Therefore, the present embodiment is capable of increasing the quantity of microorganisms per unit weight of its retaining means, and thus improving the efficiency of purification treatment.

As charcoal 102 contains elements necessary for biological reaction of microorganisms, such as sodium (Na), potassium (K), calcium (Ca), magnesium (Mg), iron (Fe), copper (Cu) and zinc (Zn), it is capable of retaining microorganisms in good condition and therefore efficiently performing purification treatment.

Furthermore, as charcoal 102 has larger pores than those of activated carbon, it is less prone to having its pores blocked by microorganisms retained therein and capable of capturing tiny living organisms in addition to microorganisms, the present embodiment is capable of improving efficiency of purification treatment by using these organisms.

When discharged from the discharge port of pump 113, water 118 in water tank 101 crushes scum on the water surface, and pump 113 circulates water 118 together with air. Water 118 is then purified by microorganisms retained in charcoal 102 of lower and upper treatment layers 103a/103b. Therefore, the present embodiment is capable of efficient purification treatment. The present invention is also effective in preventing generation of scum, thereby improving the clarity of the water and simplifying the operation of changing water in tank 101.

Although water collecting board 104 is formed into a hollow plate in the above explanation, the same effect may be obtained by using any shape of water collecting means, for example, a board corresponding to the curve of water tank 101 or a plurality of tubes arranged and connected to main pipe 106 in the same manner as the first embodiment shown in Figs. 1 to 6.

Furthermore, although water collecting board 104 has irrigation holes 105 bored in the upper and lower surfaces thereof and lower and upper treatment layers 103a/103b consisting of charcoal 102 and respectively formed under and on water collecting board 104 in the above explanation, the same effect may be obtained by using water collecting board which is provided with irrigation holes 105 on the upper and side surfaces and is disposed directly on bottom 101a of water tank 101, with a treatment layer being formed by means of spreading charcoal 102 all over water collecting board 104.

Next, a fifth embodiment of the present invention is explained hereunder, referring to Figs. 14 and 15.

In Figs. 14 and 15, numeral 121 denotes a body of flowing water which is, in case of the present embodiment, a river. A plurality of rectangular containers 122 extending in the direction of the flow of the river are provided at specified intervals on river bed 121a of river 121 by means of digging into the river bed to a depth of, for example, about 50 cm.

On the bottom of these containers 122, river gravel and/or pebbles are spread so as to form a lower gravel layer 123.

Formed on lower gravel layer 123 is a lower treatment layer 126a which consists of charcoal 125 having a particle size of, for example, 20 to 50 mm, charcoal 125 being spread to a thickness of, for example. 0.2 to 0.5 m in order to retain microorganisms (not shown), such as bacteria, planktons and various aerobic bacteria therein.

Disposed on lower treatment layer 126a is means for collecting water which consists of water collecting pipes 128 similar to those of the first embodiment shown in Figs. 1 to 6. Each water collecting pipe 128 is made of a vinyl chloride tube having a diameter between, for example, 20 and 75 mm, and is provided with a plurality of irrigation holes 127 which have a diameter of, for example, about 10 mm and are formed at both sides thereof, being horizontally aligned at specified intervals in the longitudinal direction of the pipe.

Water collecting pipes 128 described above have one of the two ends of each pipe closed by a cap 130 and are arranged nearly parallel with each other at specified intervals and connected through the open ends thereof to a main pipe 129 having a diameter of, for example, 150 mm in such a manner that water collecting pipes 128 form tributaries of main pipe 129.

In the same manner as the first embodiment shown in Figs. 1 to 6, each water collecting pipe 128 is provided with an air hole (not shown) for permitting air to escape and a drain hole (not shown) for permitting mud and fine sand to escape, the air hole bored in the upper surface of the pipe, near the end closed by cap 130, and the drain hole in the bottom of the end of cap 130.

In the same manner as the first embodiment, a cylindrical net 132 with meshes of, for example, 5 mm is fitted around each water collecting pipe 128 and affixed thereto in order to prevent foreign matter from plugging irrigation holes 127.

In the same manner as the first embodiment shown in Figs. 1 to 6, it is preferred that the cross section of each water collecting pipe 128 is nearly identical to the total area of the apertures of the plurality of irrigation holes 127 of said water collecting pipe 128 and that the cross section of each main pipe 129 is nearly identical to the total of the cross sections of all water collecting pipes 128 which are connected to said main pipe 129. It is also preferable that irrigation holes 127 are bored at intervals nearly identical to the thickness of lower and upper treatment layers 126a/126b.

The aforementioned drain hole and the air hole may be formed at the end of main pipe 129.

In the same manner as lower treatment layer 126a, an upper treatment layer 126b is formed by covering water collecting pipes 128 with charcoal 125 having a particle size of, for example, 10 to 50 mm to a thickness of, for example, 0.2 to 0.5 m so that the upper surface of upper treatment layer 126b is flush with river bed 121a.

In order to prevent charcoal 125 from floating, river gravel and pebbles are spread to a thickness of, for example, 0.2 to 0.5 m on upper treatment layer 126b, thereby forming an upper gravel layer 133 so as to form a flat river bed 121b.

Numeral 135 denotes a reservoir tank which is provided with screens 136 at the side walls directly facing river 121, in the same manner as reservoir tank 18 of the first embodiment shown in Figs. 1 to 6. Screens 136 divide reservoir tank 135 into an influent chamber 137, the lower part of which is separated so as to serve as a settling chamber (not shown), and a pump room 140, which is provided with a submerged pump 139 connected to a circulation pipe 138 linked with the vicinity of the surface of river 121.

The lower part of reservoir tank 135 is linked with main pipe 129, to which water collecting pipes 128 are connected.

Numeral 142 denotes a circulation pipe which serves as a circulation means and is embedded in the bank of river 121 along the direction of its flow, with an end thereof being connected to circulation pipe 138, near the part where circulation pipe 138 is connected to submerged pump 139.

The other end of circulation pipe 142 is connected to an air introducing means 144 introducing air in flowing water 143, which is water flowing into circulation pipe 142 to receive purification treatment.

Connected to air introducing means 144 is a discharge pipe 147 having orifices 146 bored along the longitudinal direction thereof. Discharge pipe 147 is disposed near river bed 121a, in the widthwise direction of the river 121.

Next, the process of purification treatment using a purifier according to the fifth embodiment described above is explained hereunder.

First of all, cover screens 136/136 in reservoir tank 135 with boards or similar means. Then, by means of operating submerged pump 139, suction water 143 in pump room 140 of reservoir tank 135 in order to discharge the suctioned water to the upper layer of river 121, as well as to the vicinity of river bed 121a of river 121. The discharge of water 143 to the vicinity of river bed 121a of river 121 is carried out through orifices 146 of discharge pipe 147, with air being mixed in by air introducing means 144.

The suction of water 143 causes the water level in pump room 140 to become lower than that of river 121. As a result of this difference between the water levels, water 143 of river 121 flows through lower and upper gravel layers 123/133 and lower and upper treatment layers 126a/126b, is then collected into water collecting pipes 128 from irrigation holes 127 thereof and flows through main pipe 129 into pump room 140.

In the same manner as the first embodiment shown in Figs. 1 to 6, necessary adjustment, such as adjusting the apertures of valves 148, which are respectively provided in main pipe 129, circulation pipe 138 and circulation pipe 142 and the like, as well as the suction rate of submerged pump 139, is made so that water 143 flows at approximately 1 ∼ 4 cm/min. through the thickness of lower and upper treatment layers 126a/126b.

After relatively large refuse, such as dead leaves and insect bodies, are filtered out of flowing water 143 by upper gravel layer 133, suspended organic substance and soluble organic substance contained in the filtered water are decomposed by microorganisms retained in charcoal 125.

In cases where the flow of water 143 of river 121 becomes slower, it tends to happen that dissolved oxygen in the water near river bed 121a of river 121 decreases or that microorganisms retained in charcoal 125 of lower and upper treatment layer 126a/126b excessively grow. In these cases, operate valves 148 in the same manner as the first embodiment shown in Figs. 1 to 6 and actuating submerged pump 139 to suction water 143 in reservoir tank 135.

Thus, water 143 is caused to flow through circulation pipe 138, main pipe 129 and water collecting pipes 128 and further out of irrigation holes 127 to lower and upper treatment layers 126a/126b so as to pass through the thickness of lower and upper treatment layers 126a/126b at the flow rate of 1 ∼ 4 cm/min, while water 143 is also caused to flow through circulation pipe 142, air introducing means 144 and discharge pipe 147 and to be discharged from orifices 146 together with air.

When removing excessive microorganism growth from charcoal 125, have water 143 flow out of the device at such a speed as not to damage water collecting pipes 128 or lower and upper treatment layers 126a/126b.

When the water level in reservoir tank 135 becomes lower than that of river 121 as a result of the suction of water 143, water 143 near the surface of river 121 flows into influent chamber 137 and pump room 140, with relatively large refuse, such as dead leaves and insect bodies, having been filtered out by screens 136.

Therefore, when water 143 near the surface of the river, which contains ample oxygen, flows through lower and upper treatment layers 126a/126b, suspended organic substance and soluble organic substance are decomposed by microorganisms retained in charcoal 125.

With the configuration as above, wherein, in the same manner as the first embodiment shown in Figs. 1 to 6, microorganisms are retained in charcoal 125, which has extraordinary porosity and very large specific surface area, the present embodiment is capable of increasing the quantity of microorganisms per unit weight of its retaining means and thus improving the efficiency of purification treatment. As charcoal 125 contains elements necessary for biological reaction of microorganisms, such as sodium (Na), potassium (K), calcium (Ca), magnesium (Mg), iron (Fe), copper (Cu) and zinc (Zn), the present embodiment is also effective in retaining microorganisms in good condition and thus improving the efficiency of purification treatment.

Because charcoal 125 retains microorganisms in good condition, effective purification is ensured even in case of a river 121 which has its banks or river bed covered with concrete and therefore lost virtually all ability of self purification.

Furthermore, as charcoal 125 has larger pores than those of activated carbon, it is less prone to having its pores blocked by microorganisms retained therein and capable of capturing tiny living organisms in addition to microorganisms and therefore improving efficiency of purification treatment.

Should inorganic pesticide which cannot be decomposed by microorganisms or industrial waste which has not been sufficiently treated flow into a river 121 by accident, charcoal 125 is capable of absorbing such undesirable substance and thus protecting the ecosystem of river 121.

According to the present embodiment, whenever it is necessary, the direction of circulation of water near the surface and the bottom of river 121 is reversed by means of submerged pump 139 according to such factors as water temperature, quantity of dissolved oxygen and conditions of pollutants including suspended substance and organic substance. Therefore, not only in the upstream reaches of river 121 but also in the downstream reaches where the flow of water 143 is slower, the present embodiment is capable of supplying oxygen as far as to river bed 121a, thereby purifying the water and improving its clarity through efficient decomposition of organic substance.

Furthermore, as the present embodiment does not require a separate site on land outside river 121 for installation of a device and simply calls for forming treatment layers 126a/126b by means of spreading charcoal 125 and river gravel on river bed 121a and installing reservoir tank 135 and other members inside the basin of river 121, it provides an easy-to-build, inexpensive purifier with a simple configuration. It is also free from the danger of damaging the environmental beauty which may be otherwise caused by installation of a device outside river 121.

As excessive microorganisms grown in charcoal 125 of lower and upper treatment layers 126a/126b can be removed by means of reversing the direction of water circulation so as to permit water 143 to flow out of irrigation holes 127 of water collecting pipes 128 and further through lower and upper treatment layers 126a/126b, efficient purification treatment is ensured. Further, as microorganisms removed from the charcoal is consumed by tiny living organisms and fish living in river 121, the present embodiment is also effective in utilizing the capacity of river 121 for self-purification.

Water 143 purified by lower and upper treatment layers 126a/126b is circulated by submerged pump 139 to flow back to lower and upper treatment layers 126a/126b through circulation pipe 142, and discharge pipe 147. Therefore, as water 143 is thus repeatedly treated, the present embodiment is effective in improving the efficiency of purification treatment as well as the clarity of water.

Although the fifth embodiment of the present invention is explained as to a case where lower and upper treatment layers 126a/126b and so forth are provided in river 121, with referring to Figs. 14 and 15, it is applicable to any type of body of flowing water including irrigation channels and canals.

Furthermore, instead of providing a lower treatment layer 126a on the bottom of a container 122 and water collecting pipes 128 on lower treatment layer 126a as in the above explanation, water collecting pipes 128 may be disposed directly on the bottom of container 122 as long as mud and sand are not exposed to the bottom of container 122 and are prevented from entering through irrigation holes 127 into water collecting pipes. Without departing from the scope or the spirit of the invention as defined in the appended claims, entry of mud and sand may be prevented by means of, for example, spreading such a non permeable member as a vinyl sheet in the same manner as the first embodiment or forming a concrete layer.

Concerning means of preventing charcoal 125 from floating, in lieu of upper gravel layer 133 as in the above explanation, a net of finer meshes than the particle size of charcoal 125 may be used to cover and secure charcoal 125.

Next, a sixth embodiment of the present invention is explained hereunder, referring to Figs. 16 and 17.

In Figs. 16 and 17, numeral 151 denotes a body of flowing water which is, in case of the present embodiment, a river. A containers 152 is formed in a bank 151a of river 151 by means of digging into the bank in such a manner as to increase the width of the river. Purify units 153 similar to purifying units 42 of the second embodiment shown in Fig. 9 are installed on the bottomed of container 152.

Numeral 154 denotes a reservoir tank which has a submerged pump 156 serving as a circulation means in the same manner as in reservoir tank 18 of the first embodiment shown in Figs. 1 to 6.

Device main pipes 158 connected to unit main pipes 157, which project from respective purifying units 153, are connected to the bottom of reservoir tank 154.

Next, the process of purification treatment using a purifier according to the sixth embodiment described above is explained hereunder.

First of all, cover screens 160/160 of reservoir tank 154. Then, by means of operating submerged pump 156 in reservoir tank 154, suction water 159 in reservoir tank 154 and discharge it to the upper layer of river 151 in the same manner as the first embodiment shown in Figs. 1 to 6.

The suction of water 159 in reservoir tank 154 causes the water level in reservoir tank 154 to become lower than that of river 151. As a result of this difference between the water levels, water 159 flows through gravel layers 161 of purifying units 153 and lower and upper treatment layers 162a/162b, is then collected into water collecting pipes 164 and flows through main pipes 157/158 into reservoir tank 154.

In the same manner as the first embodiment shown in Figs. 1 to 6, necessary adjustment, such as adjusting the apertures of valves 167 in reservoir tank 154 as well as the suction rate of submerged pump 156, is made so that water 159 flows at approximately 1 ∼ 4 cm/min. through the thickness of lower and upper treatment layers 162a/162b.

When water 159 of river 151 flows through lower and upper treatment layers 162a/162b, suspended organic substance and soluble organic substance contained in the water are decomposed by microorganisms retained in charcoal 166 which constitutes lower and upper treatment layers 162a/162b.

In cases where the flow of water 159 of river 151 becomes slower, it tends to happen that dissolved oxygen near river bed 151a of river 151 decreases or that microorganisms retained in charcoal 166 of lower and upper treatment layer 162a/162b excessively grow. In these cases, operate valves 167 in the same manner as the first embodiment shown in Figs. 1 to 6 and actuating submerged pump 156 to suction water 159 in reservoir tank 154.

Thus, using submerged pump 156, water 159 is caused to flow through main pipes 157/158 into water collecting pipes 164 and further out of irrigation holes 163 of water collecting pipes 164 to lower and upper treatment layers 162a/162b so as to pass through the thickness of lower and upper treatment layers 162a/162b at the flow rate of 1 ∼ 4 cm/min.

When removing excessive microorganism growth from charcoal 166, have water 159 flow through purifying units 153 at such a speed as not to damage the units.

As quantity of dissolved oxygen near the surface of water 159 is relatively large, oxygen is supplied to lower and upper treatment layers 162a/162b of purifying units 153 on the bottom of container 152, and suspended organic substance and soluble organic substance are decomposed by microorganisms retained in charcoal 166.

With the configuration as above, wherein, in the same manner as the first embodiment shown in Figs. 1 to 6, microorganisms are retained in charcoal 166, which has extraordinary porosity and very large specific surface area, the present embodiment is capable of increasing the quantity of microorganisms per unit weight of its retaining means and thus improving the efficiency of purification treatment. As charcoal 166 contains elements necessary for biological reaction of microorganisms, such as sodium (Na), potassium (K), calcium (Ca), magnesium (Mg), iron (Fe), copper (Cu) and zinc (Zn), the present embodiment is also effective in retaining microorganisms in good condition and thus improving the efficiency of purification treatment. Further, effective purification is ensured even in case of a river 151 or an irrigation channel which has its banks or river bed covered with concrete and therefore lost virtually all ability of self purification.

Furthermore, as charcoal 166 has larger pores than those of activated carbon, it is less prone to having its pores blocked by microorganisms retained therein and capable of capturing tiny living organisms in addition to such microorganisms as bacteria, planktons and various fungi, and therefore improving efficiency of purification treatment by using these organisms.

Should inorganic pesticide which cannot be decomposed by microorganisms or industrial waste which has not been sufficiently treated flow into a river 151 by accident, charcoal 166 is capable of absorbing such undesirable substance and thus protecting the ecosystem of river 151.

According to the present embodiment, purification treatment is conducted with the direction of circulation being reversed whenever it is necessary, according to such factors as water temperature, quantity of dissolved oxygen and conditions of pollutants including suspended substance and organic substance. Therefore, not only in the upstream reaches of the river but also in the downstream reaches, where the flow of water 159 is slower, the present embodiment is capable of supplying oxygen as far as to the river bed, thereby purifying the water and improving its clarity through efficient decomposition of organic substance.

Furthermore, as purifying units 153, which have been separately made and filled with inexpensive charcoal, are installed in container 152 formed in a bank of river 151, lower and upper treatment layers 162a/162b are located in container 152 in the bank, outside the course of flowing water and prevented from damage even in case of a turbid stream. In addition, the present embodiment provides an easy-to-build, inexpensive purifier with a simple configuration. It does not require a site for installation of a separate device and is also free from the danger of damaging the environmental beauty which may be otherwise caused by installation of a device outside river 151.

Furthermore, the sixth embodiment shown in Figs. 16 and 17 is explained as above referring to the configuration wherein each purifying unit 153 is provided with a gravel layer 161. However, in cases where gravel layer 161 is formed on the bottom of container 152, or where the bottom of container 152 is formed with concrete or covered by a non permeable member, such as a vinyl sheet, purifying units may be affixed to the bottom of container 152 by anchors or similar means instead of being provided with gravel layer 161 and lower treatment layer 162a.

Next, a seventh embodiment of the present invention is explained hereunder, referring to Figs. 18 and 19.

In Figs. 18 and 19, numeral 171 denotes a body of flowing water which is, in case of the present embodiment, a river. More precisely, it is a river basin where there is a difference in the water levels between its upstream and downstream. A typical location such as above is the middle reaches of a river. A conduit 173 is formed at river 171 in order to direct water 172 which is to be treated out of river 171.

Formed at the river-side end of conduit 173, i. e. the end at which conduit 173 is connected to river 171, is a refuse removing section 175 which is a screen, a net or any other similar member for removing relatively large refuse, such as garbage mixed in sewage, dead leaves and insect bodies. A reservoir tank 176 is installed at the other end of conduit 173.

Reservoir tank 176 is formed into a box-like shape with the open end at the top. A settling chamber 178 for removing by settling mud and sand which flows in settling chamber 178 together with water 172. Attached to a side of reservoir tank 176 is an air dispersing member 180 which is a board provided with a plurality of holes 179 for aerating water 172 introduced into reservoir tank 176. Air dispersing member 180 is also provided with an air generating device (not shown), such as an air blower.

The upper part of reservoir tank 176 is connected to conduit 173, and is provided with a plurality of discharge ports 182 which are formed above settling chamber 178 and through which aerated water 172 is discharged.

Numeral 184 denotes containers which are formed by digging into the river bed near the base end of reservoir tank 176, below discharge ports 182, downward. According to the difference of the levels of upstream and downstream of river 171, containers 184 are provided in an appropriate number of tiers, each container 184 having at its downstream side a weir 185, the height of which is vertically adjustable like a water gate.

Disposed near the base end of each weir 185 are irrigation pipes 186 which are tube-shaped channels serving as a water passage. Each irrigation pipe 186 has one of its ends connected to container 184 located upstream of weir 185 thereof and the other end open above container 184 downstream therefrom. The downstream ends of irrigation pipes 186 of weir 185 of the lowest container 184 are connected to river 171 so that water 172 having flowed therethrough returns to the river.

An appropriate number of purifying units 188 similar to those of the second embodiment shown in Figs. 7 to 9 are installed in each container 184.

Each purifying unit 188 is connected to a main pipe 189 which is connected to the corresponding irrigation pipe 186 of weir 185.

River gravel and pebbles are spread on purifying units 188 so as to form an upper gravel layer 191 in order to prevent upper treatment layers 190b of purifying units 188 from being exposed to sunshine.

Next, the process of purification treatment using a purifier according to the seventh embodiment described above is explained hereunder.

First of all, water 172 flows from river 171 through conduit 173 into reservoir tank 176, with relatively large refuse, such as garbage mixed in sewage, dead leaves and insect bodies, being removed by refuse removing section 175.

Mud and sand in water 172 settle in reservoir tank 178, while air is supplied from holes 179 of air dispersing member 180 installed at a side wall of reservoir tank 176. Water is then discharged from discharge ports 182 of reservoir tank 176 onto purifying units 188.

Water 172 continues to flow through lower and upper treatment layers 190a/190b of purifying units 188, with suspended organic substance and soluble organic substance contained therein being decomposed by microorganisms retained in charcoal 192, and then flows through irrigation holes (not shown) into water collecting pipes 193.

In the same manner as the first embodiment shown in Figs. 1 to 6, necessary adjustment, such as adjusting the heights of weirs 185 and setting the respective diameters of water collecting pipes 193, the irrigation holes, main pipes 189, irrigation pipes 186, discharge holes 182 and so forth beforehand, is made so that water 172 flows at approximately 1 ∼ 4 cm/min. through the thickness of lower and upper treatment layers 190a/190b.

Water 172 that has flowed into water collecting pipes 193 flows through main pipes 189 and irrigation pipes 186 and is discharged onto purifying units 188 installed in container 184 at the following tier so as to repeatedly undergo the same treatment.

Water 172 which has flowed into water collecting pipes 193 of purifying units 188 in the lowest container 184 flows through main pipes 189 and irrigation pipes 186 back into river 171.

In cases where the quantity of water 172 to be treated exceeds the capacity of purifying units 188 due to a rise of river 171 or other reasons, the height of weirs 185 should be adjusted in order to prevent an amount of water 172 from flowing over weirs 185.

With the configuration as above, wherein, in the same manner as the first embodiment shown in Figs. 1 to 6, microorganisms are retained in charcoal 192, which has extraordinary porosity and very large specific surface area, the present embodiment is capable of increasing the quantity of microorganisms per unit weight of its retaining means and thus improving the efficiency of purification treatment. As charcoal 192 contains elements necessary for biological reaction of microorganisms, such as sodium (Na), potassium (K), calcium (Ca), magnesium (Mg), iron (Fe), copper (Cu) and zinc (Zn), the present embodiment is also effective in retaining microorganisms in good condition and thus improving the efficiency of purification treatment. Further, effective purification is ensured even in case of a river 171 or an irrigation channel which has its banks or river bed covered with concrete and therefore lost virtually all ability of self purification.

Furthermore, as charcoal 192 has larger pores than those of activated carbon, it is less prone to having its pores blocked by microorganisms retained therein and capable of capturing tiny living organisms in addition to such microorganisms as bacteria, planktons and various fungi, and therefore improving efficiency of purification treatment by using these organisms.

Should inorganic pesticide which cannot be decomposed by microorganisms or industrial waste which has not been sufficiently treated flow into a river 171 by accident, charcoal 192 is capable of absorbing such undesirable substance and thus protecting the ecosystem of river 171.

As purifying units 188 filled with inexpensive charcoal are installed in tiers along the height gradations of flowing river 171, the present embodiment is capable of purifying water 172 of river 171 at low cost with a device of a simple configuration which does not require a circulation means, such as a pump.

Furthermore, as water 172 is aerated by air dispersing means 180 of a reservoir tank 176, sufficient oxygen for purification by microorganisms retained in charcoal 192 is secured, and efficient purification is performed.

Although the seventh embodiment shown in Figs. 18 and 19 is explained as above referring to the configuration wherein purifying units 188 are installed in containers 184, a configuration as of the fifth embodiment shown in Figs. 14 and 15, wherein lower and upper treatment layers 190a/190b are formed by spreading charcoal 192 in each container 184 with water collecting pipes 193 arranged therein, may be used.

In cases where it is difficult, such as in the lower reaches of a river 171, to introduce water 172 of river 171 into reservoir tank 176, purify it using purifying units 188 in containers 184 formed in tiers, and to discharge it back to river 171 through irrigation pipes 186, the same level of effectiveness may be achieved using other means which do not require forming containers 184 in tiers. Examples of such alternative means include one which calls for forming weirs 185 gradually descending towards the downstream direction in a series of steps so as to conduct purification treatment utilizing the difference in the water levels of water 172 as it flows into respective containers 184, and another which calls for pumping up water using a circulation means such as a pump.

Next, an eighth embodiment of the present invention is explained hereunder, referring to Figs. 20 and 21.

In Fig. 20, numeral 201 denotes a first weir which is made of concrete or the like and formed into a shape of a flat wedge having inclined surfaces and the top narrower than the base.

A plurality of tubular irrigation pipes 202 which are made of vinyl chloride or the like and serve as the water passage mentioned in the appended claims are arranged at appropriate intervals in the direction of the flow of the water and embedded through the base of first weir 201, with one end of each irrigation pipe 202 being open towards upstream of the river and the other end open towards downstream of the river.

In the same manner as weirs 185 of the seventh embodiment shown in Figs. 18 and 19, the height of first weir 201 is vertically adjustable.

First weir 201 is secured with a part of its bottom being embedded in river bed 205 of river 203 in such a manner that the inclined surfaces of weir 201 are approximately perpendicular to the flow of water 204 of river 203 to be treated.

A second weir 207 in the form of a flat wedge with the vertically adjustable height as in first weir 201 is provided downstream of first weir 201 at a specified distance therefrom.

The height of second weir 207 is lower than that of first weir 201 so that the water level upstream of second weir 207 is lower than the water level upstream of first weir 201.

A recessed container 208 is formed from the base of first weir 201 towards upstream thereof by means of digging into river bed 205 of river 203 to a specified dimension.

In the same manner as the first embodiment shown in Figs. 1 to 6, a lower treatment layer 211a is formed on the bottom of container 208 by means of spreading charcoal 210 having a particle size ranging, for example, from 20 to 50 mm to a thickness of, for example, 0.2 to 0.5 m in order to retain microorganism (not shown) therein.

Numeral 213 denotes water collecting pipes which serve as a water collecting means mentioned in the appended claims. In the same manner as the first embodiment, each water collecting pipe 213 is made of a vinyl chloride tube having a diameter between, for example, 50 and 200 mm, with one of the ends being closed. A plurality of horizontally aligned irrigations holes 214 having a diameter of about 15 mm are bored at specified intervals in both sides of each pipe 213, along the longitudinal direction of the pipe in such a manner that each irrigation hole 214 is located opposite to the irrigation hole corresponding thereto. In order to prevent foreign matter from plugging irrigation holes 214, a cylindrical net 215 with an inner diameter nearly the same as the outer diameter of water collecting pipe 213 and having meshes of, for example, about 10 mm is fitted around each pipe.

As shown in Figs. 20 and 21, water collecting pipes 213 are arranged at appropriate intervals on lower treatment layer 211a, with the ends open in the direction of the water flow being respectively connected to the upstream ends of the water channels of first weir 201.

In the same manner as lower treatment layer 211a, an upper treatment layer 211b is formed, covering water collecting pipes 213 by means of spreading charcoal 210 to a thickness of, for example, 0.2 to 0.5 m on water collecting pipes 213.

In order to prevent charcoal 210 from floating, a net 216 made of meshes, webbing or the like covers upper treatment layer 126b in the same manner as net 16 of the first embodiment shown in Figs. 1 to 6.

A fine gravel layer 219 consisting of fine gravel 218 having the particle size ranging, for examples, from 50 to 100 mm spread on upper treatment layer 211b covered by net 216 is formed so that neither normal flow nor turbid flow of water 204 will damage lower and upper treatment layers 211a/211b, water collecting pipes 213 or other members. A gravel layer 220 is formed on fine gravel layer 219 by means of spreading river gravel and pebbles having accumulated on river bed 205 to a thickness of, for example, 0.2 to 0.5 m in order to level the surface of the river bed.

Next, the process of purification treatment using a purifier according to the eighth embodiment described above is explained hereunder.

First of all, water 204 flowing in river 203 is dammed up by first weir 201.

As second weir 207 is formed lower than first weir 201 so that the water level upstream of second weir 207 is lower than the water level upstream of first weir 201, the pressure due to the difference in the water levels causes the dammed water 204 to flow through gravel layer 220 and fine gravel layer 219 into upper and lower treatment layers 211b/211a. When water 204 flows through gravel layer 220 and fine gravel layer 219, river gravel and pebbles which have flowed from upstream of the river and such refuse as garbage mixed in sewage, dead leaves and insect bodies are filtered out.

Water 204 which has flowed into upper and lower treatment layers 211b/211a is purified, with suspended organic substance and soluble organic substance contained therein being decomposed by microorganisms retained in charcoal 210 of upper and lower treatment layers 211b/211a, and then flows through irrigation holes 214 into water collecting pipes 213.

In the same manner as the first embodiment shown in Figs. 1 to 6, necessary adjustment, such as adjusting the heights of weirs 201/207 and setting the respective diameters of water collecting pipes 213, irrigation holes 214 and irrigation pipes 202 beforehand, is made so that water 204 flows at approximately 1 ∼ 4 cm/min. through the thickness of lower and upper treatment layers 211a/211b.

Water 204 that has flowed into water collecting pipes 213 flows through irrigation pipes 202 and is discharged downstream of weir 201 and continues to flow over weir 207 and down the river.

With the configuration as above, wherein, in the same manner as the first embodiment shown in Figs. 1 to 6, microorganisms are retained in charcoal 210, which has extraordinary porosity and very large specific surface area, the present embodiment is capable of increasing the quantity of microorganisms per unit weight of its retaining means and thus improving the efficiency of purification treatment. As charcoal 210 contains elements necessary for biological reaction of microorganisms, such as sodium (Na), potassium (K), calcium (Ca), magnesium (Mg), iron (Fe), copper (Cu) and zinc (Zn), the present embodiment is also effective in retaining microorganisms in good condition and thus improving the efficiency of purification treatment. Further, effective purification is ensured even in case of a river 203 or an irrigation channel which has its banks or river bed covered with concrete and therefore lost virtually all ability of self purification.

Furthermore, as charcoal 210 has larger pores than those of activated carbon, it is less prone to having its pores blocked by microorganisms retained therein and capable of capturing tiny living organisms in addition to such microorganisms as bacteria, planktons and various fungi, and therefore improving efficiency of purification treatment by using these organisms.

Should inorganic pesticide which cannot be decomposed by microorganisms or industrial waste which has not been sufficiently treated flow into a river 203 by accident, charcoal 210 is capable of absorbing such undesirable substance and thus protecting the ecosystem of river 203.

According to the present embodiment, weirs 201/207 provided in river 203 prevent water 204 of river 203 from flowing down, and the difference in the water levels of upstream and downstream of first weir 201 causes water 204 to flow through upper and lower treatment layers 211b/211a which consist of inexpensive charcoal, while being purified thereby, and flows on through water collecting pipes 213 and down the river. Therefore, the present embodiment is capable of purifying water 204 of river 203 at low cost with a device of a simple configuration which does not require a circulation means, such as a pump.

As lower and upper treatment layers 211a/211b are formed in container 208 which is formed by means of digging into river bed 205, the present embodiment does not require a separate site on land outside the basin of river 203 for installation of a device nor damages the environmental beauty.

In the eighth embodiment shown in Figs. 20 and 21, even in cases where only either one or the other of weir 201 or weir 207 can be built or where there is virtually no difference in the water levels between the upstream side and the downstream side of first weir 201 because, for example, the site is in the lower reaches of river 203, where the flow rate of water 204 is too slow to produce the difference in the water levels, the embodiment is applicable by providing irrigation pipes 202 of weir 201 with means for circulating or reversing the flow of water, such as a pump, in order to force the water to flow down.

In cases where the flow rate of water 204 is slow, resulting in generation of water-bloom, other algae and scum near the surface of water 204 dammed up by first weir 201, the height of first weir 201 may be adjusted to permit water 204 near the surface to flow down, over first weir 201 so that agitation of the water resulted from this downflow of water 204 crushes the algae and scum, aerating the water at the same time, and that water 204 is then treated by a purifier which may be installed at the downstream side.

Although the present embodiment is explained as above referring to the configuration wherein cylindrical irrigation pipes 202 are embedded through the base of first weir 201 and connected to water collecting pipes 213 having irrigation holes 214, instead of embedding irrigation pipes 202, water collecting pipes 213 may be emplaced directly through the base of first weir 201 in such a manner that the open ends of water collecting pipes 213 are open passages, towards downstream of the river.

Next, a ninth embodiment of the present invention is explained hereunder, referring to Fig. 22.

In Fig. 22, numeral 231 denotes a first weir which is, in the same manner as first weir 201 of the eighth embodiment shown in Figs. 20 and 21, made of concrete or the like and formed into a shape of a flat wedge having inclined surfaces with the top narrower than the base and the vertically adjustable height.

First weir 231 is secured with a part of its bottom being embedded in river bed 238 of river 233 in such a manner that the inclined surfaces of weir 231 are approximately perpendicular to the flow of water 234 of river 233 to be treated.

A plurality of tubular irrigation pipes 235 which are made of vinyl chloride or the like and serve as the water passage mentioned in the appended claims are arranged at appropriate intervals in the direction of the flow of water 234 of river 233 and embedded through the base of first weir 231, with one end of each irrigation pipe 235 being open towards upstream of the river and the other end open towards downstream of the river.

A second weir 237 in the form of a flat wedge with the vertically adjustable height in the same manner as first weir 231 is provided downstream of first weir 231 at a specified distance therefrom.

The height of second weir 237 is lower than that of first weir 231 so that the water level upstream of second weir 237 is lower than the water level upstream of first weir 231.

A recessed container 239 is formed from the base of first weir 231 towards upstream thereof by means of digging into river bed 238 of river 233 to a specified dimension.

In the same manner as the first embodiment shown in Figs. 1 to 6, a lower treatment layer 242a is formed on the bottom of container 239 by means of spreading charcoal 241 having a particle size ranging, for example, from 10 to 50 mm to a thickness of, for example, 0.2 to 0.5 m in order to retain microorganism (not shown) therein.

Numeral 243 denotes water collecting pipes which serve as a water collecting means referred to in the appended claims. In the same manner as the first embodiment shown in Figs. 1 to 6, each water collecting pipe 243 is made of a vinyl chloride tube having a diameter between, for example, 50 and 200 mm, with one of the ends being closed. A plurality of horizontally aligned irrigations holes 244 having a diameter of about 10 mm are formed at specified intervals at both sides of each pipe 243, in the longitudinal direction of the pipe in such a manner that each irrigation hole 244 is located opposite to the irrigation hole corresponding thereto. In order to prevent foreign matter from plugging irrigation holes 244, a cylindrical net 246 with an inner diameter nearly the same as the outer diameter of water collecting pipe 243 and having meshes of, for example, about 10 mm is fitted around each pipe.

Water collecting pipes 243 are so arranged at appropriate intervals on lower treatment layer 242a as to extend in the direction of the water flow, with their open ends being respectively connected to irrigation pipes 235 of first weir 201.

An upper treatment layer 242b is formed on water collecting pipes 243, by means of spreading charcoal 241, which is similar to the charcoal of lower treatment layer 242a, to a thickness of, for example, 0.2 to 0.5 m so as to cover water collecting pipes 243.

In order to prevent charcoal 241 from floating, a net 247 made of meshes, webbing or the like covers upper treatment layer 242b in the same manner as net 16 of the first embodiment shown in Figs. 1 to 6.

A fine gravel layer 250 consisting of fine gravel 249 having the particle size ranging, for examples, from 20 to 50 mm spread on upper treatment layer 242b covered by net 247 is formed so that neither normal flow nor turbid flow of water 234 will damage lower and upper treatment layers 242a/242b, water collecting pipes 243 or other members. A gravel layer 252 is formed on fine gravel layer 250 by means of spreading river gravel and pebbles having accumulated on river bed 238 to a thickness of, for example, 0.2 to 0.5 m so as to be flush with the surface of the river bed.

Next, the process of purification treatment using a purifier according to the ninth embodiment described above is explained hereunder.

First of all, water 234 flowing in river 233 is dammed up by first weir 231.

As second weir 237 is formed lower than first weir 231 so that the water level upstream of second weir 237 is lower than the water level upstream of first weir 231, the pressure due to the difference in the water levels causes the dammed water 234 to flow through gravel layer 252 and fine gravel layer 250 into upper and lower treatment layers 242b/242a. When water 234 flows through gravel layer 252 and fine gravel layer 250, river gravel and pebbles which have flowed from upstream of the river and such refuse as garbage mixed in sewage, dead leaves and insect bodies are filtered out.

Water 234 which has flowed into upper and lower treatment layers 242b/242a is purified, with suspended organic substance and soluble organic substance contained therein being decomposed by microorganisms retained in charcoal 241 of upper and lower treatment layers 242b/242a, and then flows through irrigation holes 244 into water collecting pipes 243.

Water 234 that has flowed into water collecting pipes 243 flows through irrigation pipes 235 and then flows out of irrigation holes 244 into upper and lower treatment layers 242b/242a at the downstream side of first weir 231 where it is again purified by microorganisms retained in charcoal 241. Water 234 which has thus been given the second treatment flows through fine gravel layer 250 and gravel layer 252, is discharged to the upstream side of second weir 237 and continues to flow over second weir 237 and down the river.

In the same manner as the first embodiment shown in Figs. 1 to 6, necessary adjustment, such as adjusting the heights of weirs 231/237 and setting the respective diameters of water collecting pipes 243, irrigation holes 244 and irrigation pipes 235 beforehand, is made so that water 234 flows at approximately 1 ∼ 4 cm/min. through the thickness of upper and lower treatment layers 242a/242b.

With the configuration as above, wherein, in the same manner as the first embodiment shown in Figs. 1 to 6, microorganisms are retained in charcoal 241, which has extraordinary porosity and very large specific surface area, the present embodiment is capable of increasing the quantity of microorganisms per unit weight of its retaining means and thus improving the efficiency of purification treatment. As charcoal 241 contains elements necessary for biological reaction of microorganisms, such as sodium (Na), potassium (K), calcium (Ca), magnesium (Mg), iron (Fe), copper (Cu) and zinc (Zn), the present embodiment is also effective in retaining microorganisms in good condition and thus improving the efficiency of purification treatment. Further, effective purification is ensured even in case of a river 233 or an irrigation channel which has its banks or river bed covered with concrete and therefore lost virtually all ability of self purification.

Furthermore, as charcoal 241 has larger pores than those of activated carbon, it is less prone to having its pores blocked by microorganisms retained therein and capable of capturing tiny living organisms in addition to such microorganisms as bacteria, planktons and various fungi, and therefore improving efficiency of purification treatment by using these organisms.

Should inorganic pesticide which cannot be decomposed by microorganisms or industrial waste which has not been sufficiently treated flow into a river 233 by accident, charcoal 241 is capable of absorbing such undesirable substance and thus protecting the ecosystem of river 233.

According to the present embodiment, weirs 231/237 provided in river 233 prevent water 234 of river 233 from flowing down, and the difference in the water levels of upstream and downstream of first weir 231 causes water 234 to flow through upper and lower treatment layers 242b/242a, while being purified thereby, and flows on through water collecting pipes 243 and down the river. Therefore, the present embodiment is capable of purifying water 234 of river 233 at low cost with a device of a simple configuration which does not require a circulation means, such as a pump.

As lower and upper treatment layers 242a/242b are formed on river bed 238, the present embodiment does not require a separate site on land outside the basin of river 233 for installation of a device nor damages the environmental beauty.

In the ninth embodiment shown in Fig. 22, even in cases where only either one or the other of weir 231 or weir 237 can be built or where there is virtually no difference in the water levels between the upstream side and the downstream side of first weir 231 because, for example, the site is in the lower reaches of river 233, where the flow rate of water 234 is too slow to produce the difference in the water levels, the embodiment is applicable by providing irrigation pipes 235 of first weir 231 with means for circulating or reversing the flow of water, such as a pump, in order to force the water to flow down.

In cases where the flow rate of water 234 is slow, resulting in generation of water-bloom, other algae and scum near the surface of water 234 dammed up by first weir 231, the height of first weir 231 may be adjusted to permit water 234 near the surface to flow down, over first weir 231 so that agitation of the water resulted from this downflow of water 234 crushes the algae and scum, aerating the water at the same time, and that water 234 is then treated by the purifying device installed at the downstream side.

Next, a tenth embodiment of the present invention is explained hereunder, referring to Fig 23.

In Fig. 23, numeral 261 denotes a first weir which is, in the same manner as first weir 201 of the eighth embodiment shown in Figs. 20 and 21, made of concrete or the like and formed into a shape of a flat wedge having inclined surfaces with the top narrower than the base and the vertically adjustable height.

First weir 261 is secured with a part of its bottom being embedded in river bed 264 of river 262 in such a manner that the inclined surfaces of weir 261 are approximately perpendicular to the flow of water 263 of river 262 to be treated.

A plurality of tubular irrigation pipes 265 which are made of, for example, vinyl chloride and serve as the water passage mentioned in the appended claims are arranged at appropriate intervals in the direction of the flow of water 263 of river 262 and embedded through the base of first weir 261, with one end of each irrigation pipe 265 being open towards upstream of the river and the other end open towards downstream of the river.

A second weir 267 in the form of a flat wedge with the vertically adjustable height in the same manner as first weir 261 is provided downstream of first weir 261 at a specified distance therefrom.

Bored in the base of the upstream side surface of second weir 267 are a plurality of inflow ports 268 which are located opposite to respective irrigation pipes 265 of first weir 261 and connected to the lower end of a by-pass channel 269, which vertically extends and has its upper end open at the top of second weir 267.

A mud removing means 271 is provided at the lower end of by- pass channel 269. Mud removing means 271 has a drainage channel 272 which is open to the downstream side so as to discharge sand and mud removed by mud removing means 271 downstream of the purifier.

The height of second weir 267 is lower than that of first weir 261 so that the water level upstream of second weir 267 is lower than the water level upstream of first weir 261.

Recessed containers 274a/274b are respectively formed upstream and downstream of the base of first weir 261 by means of digging into the river bed to specified dimensions.

In the same manner as fine gravel layer 250 of the ninth embodiment shown in Fig. 22, a lower fine gravel layer 276a is formed on the bottom of upstream-side container 274a by means of spreading fine gravel 275 having a particle size ranging, for example, from 20 to 50 mm.

Numeral 277 denotes water collecting pipes which serve as a water collecting means referred to in the appended claims. In the same manner as the first embodiment shown in Figs. 1 to 6, each water collecting pipe 277 is made of a vinyl chloride tube having a diameter ranging, for example, from 100 to 300 mm, with one of the ends being closed. A plurality of horizontally aligned irrigations holes 278 having a diameter of about 10 mm are formed at specified intervals in both sides of each pipe 277, in the longitudinal direction of the pipe in such a manner that each irrigation hole 278 is located opposite to the irrigation hole corresponding thereto. In order to prevent foreign matter from plugging irrigation holes 278, a cylindrical net 279 with an inner diameter nearly the same as the outer diameter of water collecting pipe 277 and having meshes of, for example, about 10 mm is fitted around each pipe.

Water collecting pipes 277 are so arranged at appropriate intervals on lower fine gravel layer 276a as to extend in the direction of the water flow, with their open ends being respectively connected to the upstream ends of irrigation pipes 265 of first weir 261.

An upper fine gravel layer 276b is formed on water collecting pipes 277, by means of spreading fine gravel similar to that of lower fine gravel layer 276a to a thickness of, for example, 0.2 to 0.5 m so as to cover water collecting pipes 277.

A gravel layer 281 is formed on upper fine gravel layer 276b by means of spreading river gravel and pebbles having accumulated on river bed 264 to a thickness of, for example, 0.2 to 0.5 m so as to be flush with the surface of the river bed.

In the same manner as the first embodiment shown in Figs. 1 to 6, a lower treatment layer 283a is formed on the bottom of downstream-side container 274b by means of spreading charcoal 282 having a particle size ranging, for example, from 20 to 50 mm to a thickness of, for example, 0.2 to 0.5 m in order to retain microorganism (not shown) therein.

Cylindrical water collecting pipes 277, each of which is provided with, in the same manner as water collecting pipes 277 disposed in upstream-side container 274a, irrigation holes 278 which are bored therein and a net 279 which is fitted therearound, are disposed on lower treatment layer 283a so as to extend in the direction of the water flow. Water collecting pipes 277 have their both ends open and are arranged at appropriate intervals, with one end of each pipe being connected to the downstream end of corresponding irrigation pipe 265 of first weir 261 and the other end connected to corresponding inflow port 268 of second weir 267.

An upper treatment layer 283b is formed on water collecting pipes 277, by means of spreading charcoal 282, which is similar to the charcoal of lower treatment layer 283a, to a thickness of, for example, 0.2 to 0.5 m so as to cover water collecting pipes 277.

In order to prevent charcoal 282 from floating, a net 285 made of, for example, meshes or webbing covers upper treatment layer 283b in the same manner as net 16 of the first embodiment shown in Figs. 1 to 6.

In the same manner as upper and lower fine gravel layers 276b/276a formed in upstreamside container 274a, a fine gravel layer 286 consisting of fine gravel 275 having the particle size ranging, for examples, from 20 to 50 mm spread on upper treatment layer 283b covered by net 285 is formed so that neither normal flow nor turbid flow of water 263 will damage lower and upper treatment layers 283a/283b or water collecting pipes 277. In the same manner as gravel layer 281 at the upstream side, gravel layer 281 is formed on fine gravel layer 286 by means of spreading river gravel and pebbles to a thickness of, for example, 0.2 to 0.5 m so as to be flush with the surface of the river bed.

Next, the process of purification treatment using a purifier according to the tenth embodiment described above is explained hereunder.

First of all, water 263 flowing in river 262 is dammed up by first weir 261.

As second weir 267 is formed lower than first weir 261 so that the water level upstream of second weir 267 is lower than the water level upstream of first weir 261, the pressure due to the difference in the water levels causes water 263 dammed by first weir 261 to flow through gravel layer 281, upper and lower fine gravel layers 276b/276a, with river gravel and pebbles which have flowed from upstream of the river and such refuse as garbage mixed in sewage, dead leaves and insect bodies being filtered out by these gravel layers. Then, the water flows through irrigation holes 278 into water collecting pipes 277.

Water 263 that has flowed into water collecting pipes 277 flows through irrigation pipes 265 and then flows out of irrigation holes 278 into upper and lower treatment layers 283b/283a at the downstream side of first weir 261 where it is purified by microorganisms retained in charcoal 282. Water 263 which has thus been given the treatment flows through fine gravel layer 286 and gravel layer 281, is discharged to the upstream side of second weir 267 and continues to flow over second weir 267 and down the river.

In the same manner as the first embodiment shown in Figs. 1 to 6, necessary adjustment, such as adjusting the heights of weirs 261/267 and setting the respective diameters of water collecting pipes 277, irrigation holes 278, irrigation pipes 265 and by-pass channel 269 beforehand, is made so that water 263 flows at approximately 1 ∼ 4 cm/min. through the thickness of upper and lower treatment layers 283a/283b.

Meanwhile, mud and sand which have flowed into water collecting pipes 277 and accumulated therein are discharged by mud removing means 271 from inflow ports 268 of second weir 267 through drainage channel 272 downstream of the river. Water 263 which has flowed into mud removing means 271 together with sand and mud is discharged through by-pass channel 269 downstream of the river.

With the configuration as above, wherein, in the same manner as the first embodiment shown in Figs. 1 to 6, microorganisms are retained in charcoal 282, which has extraordinary porosity and very large specific surface area, the present embodiment is capable of increasing the quantity of microorganisms per unit weight of its retaining means and thus improving the efficiency of purification treatment. As charcoal 282 contains elements necessary for biological reaction of microorganisms, such as sodium (Na), potassium (K), calcium (Ca), magnesium (Mg), iron (Fe), copper (Cu) and zinc (Zn), the present embodiment is also effective in retaining microorganisms in good condition and thus improving the efficiency of purification treatment. Further, effective purification is ensured even in case of a river 262 or an irrigation channel which has its banks or river bed covered with concrete and therefore lost virtually all ability of self purification.

Furthermore, as charcoal 282 has larger pores than those of activated carbon, it is less prone to having its pores blocked by microorganisms retained therein and capable of capturing tiny living organisms in addition to such microorganisms as bacteria, planktons and various fungi, and therefore improving efficiency of purification treatment by using these organisms.

Should inorganic pesticide which cannot be decomposed by microorganisms or industrial waste which has not been sufficiently treated flow into a river 262 by accident, charcoal 282 is capable of absorbing such undesirable substance and thus protecting the ecosystem of river 262.

According to the present embodiment, weirs 261/267 provided in river 262 prevent water 263 of river 262 from flowing down, and the difference in the water levels of upstream and downstream of first weir 261 causes water 263 to flow through upper and lower treatment layers 283b/283a which consist of inexpensive charcoal, while being purified thereby, and flows on through water collecting pipes 277 and down the river.

Therefore, the present embodiment is capable of purifying water 263 of river 262 at low cost with a device of a simple configuration which does not require a circulation means, such as a pump.

As lower and upper treatment layers 283a/283b are formed on river bed 264, the present embodiment does not require a separate site on land outside the basin of river 262 for installation of a device nor damages the environmental beauty.

Even in case of a river 262 which contains a large quantity of sand and clayey mud, the present embodiment is capable of efficient purification treatment through preventing sand, mud and clay from accumulating in water collecting pipes 277.

In the tenth embodiment shown in Fig. 23, too, even in cases where there is virtually no difference in the water levels between the upstream side and the downstream side of first weir 261 as described in the above explanation of the ninth embodiment shown in Fig. 22, the embodiment is applicable by providing irrigation pipes 265 of first weir 261 with means for circulating or reversing the flow of water, such as a pump, in order to force the water to flow down.

In cases where the flow rate of water 263 of river 262 decreases, resulting in decrease in the quantity of dissolved oxygen near river bed 264 of river 262, an air introducing means 144 similar to that of the fifth embodiment shown in Figs. 14 and 15 or a water circulation means may be provided.

Next, an eleventh embodiment of the present invention is explained hereunder, referring to Figs. 24 and 25.

In Figs. 24 and 25, numeral 291 denotes a body of flowing water which is, in case of the present embodiment, an irrigation channel. In order to restrain the flow of water 303, irrigation channel 291 is provided with flat weirs at three locations at specified intervals, i. e. weirs 292/293/294 each of which is built over the total width of irrigation channel 291, approximately perpendicular to the direction of the water flow. Weirs 292/293/294 thus divide the basin of irrigation channel 291, thereby forming containers 296/297.

Weirs 292/293/294 are built in such a manner that further downstream you go, the lower the weir, with the bottoms of containers 296/297, too, being formed in tiers, so that, as in the seventh embodiment shown in Figs. 18 and 19, the water level of container 297 at the downstream side is lower than the water level of upstream-side container 296.

Embedded through the base of weir 293, which is the second weir from upstream, are tubular irrigation pipes 298 serving as a water passage to connect the upstream side of weir 293 to downstream side thereof.

An appropriate number of purifying units 300 having a double-tube structure similar to that of the third embodiment shown in Figs. 10 and 11 are installed on the bottoms of respective containers 296/297. Each purifying unit 300 extends in the direction of flow of water 303 of irrigation channel 291, with its annular end plate 302, through which an open end of a water collecting pipe 301 is attached to an irrigation pipe 298.

River gravel and pebbles are spread on purifying units 300 to a thickness of, for example, 0.2 to 0.5 m so as to form a gravel layer 304 in order to cover and secure purifying units 300.

Concerning means for securing purifying units 300, anchors or the like may be used.

Next, the process of purification treatment using a purifier according to the eleventh embodiment described above is explained hereunder.

First of all, water 303 flowing in irrigation channel 291 is dammed up by first weir 292, which is located the furthest upstream.

The dammed water flows, together with air, over first weir 292 and down into upstream-side container 296 between first weir 292 and second weir 293. Water 303 that has flowed down into upstream-side container 296 is dammed again by second weir 293.

As the height of second weir 293 is different from the height of third weir 294, which is located third from the upstream end, the water level of upstream-side container 296 is higher than the water level of downstream-side container 297 between second weir 293 and third weir 294. Therefore, the pressure due to the difference in the water levels causes water 303 dammed by second weir 293 to flow through gravel layer 304, with river gravel and pebbles having flowed from upstream and such refuse as garbage mixed in sewage, dead leaves and insect bodies being removed, and further flows through holes 307 of tube 306 of each purifying unit 300 into the treatment layer.

In the same manner as the first embodiment shown in Figs. 1 to 6, necessary adjustment, such as adjusting the heights of weirs 292/293/294 and setting the respective diameters of water collecting pipes 301, irrigation holes 311 and irrigation pipes 298 beforehand, is made so that water 303 flows at approximately 1 ∼ 4 cm/min. through the thickness of treatment layer 308.

When water 303 flows through treatment layer 308, suspended organic substance and soluble organic substance contained therein are decomposed by microorganisms retained in charcoal 309 of treatment layer 308, and water 303 continues to flow through irrigation holes 311 of water collecting pipes 301 of purifying units 300 into water collecting pipes 301.

Then, water 303 which has flowed into water collecting pipes 301 flows through irrigation pipes 298 into water collecting pipes 301 of purifying units 300 arranged in downstream-side container 297. Water 303 then flows out of irrigation holes 311 of water collecting pipes 301 into treatment layer 308.

Having flowed out of irrigation holes 311, water 303 flows through treatment layer 308 at approximately 1 ∼ 4 cm/min., with suspended organic substance and soluble organic substance contained therein being decomposed by microorganisms retained in charcoal 309.

Water 303 which has flowed through treatment layer 308 passes through gravel layer 304, flows with air over third weir 294 and down the river.

With the configuration as above, wherein, in the same manner as the first embodiment shown in Figs. 1 to 6, microorganisms are retained in charcoal 309, which has extraordinary porosity and very large specific surface area, the present embodiment is capable of increasing the quantity of microorganisms per unit weight of its retaining means and thus improving the efficiency of purification treatment. As charcoal 309 contains elements necessary for biological reaction of microorganisms, such as sodium (Na), potassium (K), calcium (Ca), magnesium (Mg), iron (Fe), copper (Cu) and zinc (Zn), the present embodiment is also effective in retaining microorganisms in good condition and thus improving the efficiency of purification treatment. Further, effective purification is ensured even in case of an irrigation channel 291 which has its banks or bed covered with concrete and therefore lost virtually all ability of self purification.

Furthermore, as charcoal 309 has larger pores than those of activated carbon, it is less prone to having its pores blocked by microorganisms retained therein and capable of capturing tiny living organisms in addition to such microorganisms as bacteria, planktons and various fungi, and therefore improving efficiency of purification treatment by using these organisms by using these organisms.

Should inorganic pesticide which cannot be decomposed by microorganisms or industrial waste which has not been sufficiently treated flow into an irrigation channel 291 by accident, charcoal 309 is capable of absorbing such undesirable substance and thus protecting the ecosystem of irrigation channel 291.

According to the present embodiment, weirs 292/293/294 provided in irrigation channel 291 prevent water 303 of irrigation channel 291 from flowing down, and the difference in the water levels of upstream and downstream of weirs 292/293/294 causes water 303 to flow through treatment layers 308 of purifying units 303, which use inexpensive charcoal, while being purified thereby, and continue to flow through water collecting pipes 301 and down the river.

Therefore, the present embodiment is capable of purifying water 303 of irrigation channel 291 at low cost with a device of a simple configuration which does not require a circulation means, such as a pump.

As it is sufficient to install preassembled purifying units 300 on the bottoms of containers 296/297, which are formed by means of dividing the basin of irrigation channel 291 with weirs 292/293/294, the present embodiment provides an easy-to-build, inexpensive purifier which has a simple configuration and does not require a separate site outside irrigation channel 291 nor damages the environmental beauty which may be otherwise caused by installation of a device outside irrigation channel 291.

Water 303 near the surface flow over weirs 292/293/294 in the downstream direction, while water-bloom, other algae and scum are crushed and agitated in water 303 by air introduced with the downflow of water 303 and purified by the purifying units at the downstream side. Therefore, even in cases where the flow of water 303 is slow, resulting in generation of water-bloom, other algae and scum near the surface of water 303 dammed up by weirs 292/293/294, the present embodiment is capable of preventing generation of algae and scum, thereby performing efficient purification and improving the clarity of water 303.

Although the eleventh embodiment shown in Figs. 24 and 25 is explained as above referring to the configuration wherein purifying units 300 are installed in containers 296/297, the same effect may be obtained by using a configuration as of the fifth embodiment shown in Figs. 14 and 15, wherein treatment layers 308 are formed by spreading charcoal 309 in containers 296/297 with water collecting pipes 301 arranged therein.

In cases where from among weirs 292/293/294, only one can be built or where there is virtually no difference in the water levels between the upstream side and the downstream side of weirs 292/293/294 because, for example, the site is in the lower reaches of irrigation channel 291, where the flow rate of water 303 is too slow to produce the difference in the water levels, the embodiment is applicable by including means for circulating or reversing the flow of water, such as a pump, in irrigation pipes 296 of weirs 292/293/294, in order to force the water to flow down. The same effect may be obtained by forming weirs 292/293/294 in downward tiers with their heights being reduced along the flow of irrigation channel 291 and performing purification treatment utilizing the difference in the levels of water 303 which has flowed into respective containers 296/297.

In cases where the quantity of air introduced when water 303 flows over weirs 292/293/294 is not sufficient, resulting in a lack of dissolved oxygen, due to various reasons including that the flow rate of water 303 is too slow, weirs 292, 293 and/or 294 may include an aerator for dispersing air, an air introducing means 144 similar to that of the fifth embodiment shown in Figs. 14 and 15 or any other appropriate means.

Next, a twelfth embodiment of the present invention is explained hereunder, referring to Figs. 26 to 28.

In Fig. 26, numeral 321 denotes a body of flowing water which is, in case of the present embodiment, a river. River 321 is provided with a conduit 323 for directing water 322 which is to be treated out of river 321. One end of conduit 323 is open to river 321, and its bed is lower than the water level of river 321 by, for example, about 1 m.

A reservoir tank 325 is provided at the other end of conduit 323.

Reservoir tank 325 is formed into a box-like shape open at the top and has an outlet port 326 at its downstream end in relation to the direction of the water flow in reservoir tank 325, i. e. at the corner furthest away from the end connected to river 321 through conduit 323, outlet port 326 being formed by means of cutting out the said portion so that reservoir tank 325 serves as a water channel.

A plurality of baffles 327 are provided at specified intervals in reservoir tank 325 in such a manner that baffles 327 extend from the side walls of reservoir tank 325 so as to be approximately perpendicular to the direction of water 322 flowing into reservoir tank 325. Each baffle 327 alternates with another, each alternate baffle being of a different height, and extends from the opposite side wall of reservoir tank 325. These baffles divide reservoir tank 325, thereby forming settling chambers 328 for removing by settling mud and sand which flow therein from river 321 together with water 322. Reservoir tank 325 is also provided at its downstream end with an aeration room 330, which, too, is formed by baffle 327 and provided with an aerator (not shown) for aerating water 322 which has flowed out of settling chambers 328.

Attached to reservoir tank 325 is a guide channel 331 which is connected to aeration room 330 through outlet port 326. Guide channel 331 is also connected to three distributary channels 333/334 which are arranged at specified intervals and nearly parallel to each other and extend in the direction of the flow of river 321. Distributary channels 333/334 are formed in such a manner that the width of first distributary channel 333 located in the middle is identical to the total of the widths of second distributary channels 334/334 at both sides.

A first water gate 336 is installed between guide channel 331 and the upstream end of first distributary channel 333 in the middle, and second water gates 337/337 are installed between guide channel 331 and the upstream ends of respective second distributary channels 334/334 flanking first distributary channel 333.

Provided downstream of distributary channels 333/334 is a water collecting channel 340 having a submerged pump 339, which is disposed approximately the middle of water collecting channel 340 and serves as means for circulating water. Submerged pump 339 is provided with a circulation pipe 341, the end of which is linked with first distributary channel 333 so as to permit water 322 having flowed into water collecting channel 340 to flow back into first distributary channel 333.

A second water gate 337 is installed between water collecting channel 340 and the downstream end of first distributary channel 333, and first water gates 336/336 are installed between water collecting channel 340 and the downstream ends of respective second distributary channels 334/334.

The above water gates are configured in such a manner that the opening and closing action of first water gates 336 attached to first distributary channel 333 and second distributary channels 334/334 is interlocked, while the opening and closing action of second water gates 337 attached to first distributary channel 333 and second distributary channels 334/334 is interlocked in a way reverse of the action of first water gates 336.

Provided downstream of water collecting channel 340 is a discharge channel 343 which is located at the bank of river 321, further downstream than guide channel 331 in relation to the flow of river 321, and has its bottom higher than the water level of river 321. A pump 344 for discharging water 322 in discharge channel 343 to river 321 is installed near the inner end of discharge channel 343, i. e. the end opposite the river-side end. Furthermore, a third water gate 345 is provided between water collecting channel 340 and discharge channel 343.

As shown in Figs. 26 to 28, containers 347 are formed by guide channel 331, first and second distributary channels 333/334 and water collecting channel 340. The bottoms of containers 347 are leveled by concrete or the like.

Center walls 348 that separate first distributary channel 333 from containers 347 are lower than the water level of river 321 so that water 322 which has flowed into first distributary channel 333 flows over center walls 348 into containers 347, thus linking first distributary channel 333 and containers 347.

Side walls 349 that separate second distributary channels 334/334 from respective containers 347 are lower than the water level of river 321.

Disposed on the bottom of each container 347 are a plurality of main pipes 354 which are arranged at specified intervals, approximately parallel to each other. Each main pipe 354 is, for example, 150 mm in diameter and, in the same manner as the first embodiment shown in Figs. 1 to 6, has one of its end closed by a cap 352 which has a drain hole 351 bored in the lower part of its end surface. An air hole 353 is bored in the upper surface of main pipe 354, near the area closed by cap 352.

These main pipes 354 are arranged approximately perpendicular to the longitudinal direction of distributary channels 333/334 in such a manner that the open ends of main pipes 354 are respectively connected to the base of side wall 349 of corresponding second distributary channels 334 so as to be linked with the interior thereof and that the closed ends of main pipes 354 respectively face center walls 348 that constitute first distributary channel 333.

Numeral 356 denotes water collecting pipes which serve as a water collecting means mentioned in the appended claims. In the same manner as the first embodiment shown in Figs. 1 to 6, each water collecting pipe 356 is made of a vinyl chloride tube having a diameter of, for example, 100 mm. A plurality of horizontally aligned irrigation holes 357 having a diameter of, for example, about 10 mm are bored at specified intervals in both sides of each pipe 356, along the longitudinal direction of the pipe. Further, each water collecting pipe 356 has one of its ends closed by cap 352 and is provided with a drain hole and an air hole, neither of which is shown in the drawings.

In the same manner as the first embodiment shown in Figs. 1 to 6, in order to prevent foreign matter from plugging irrigation holes 357 and the air hole, a cylindrical net 358 having meshes of, for example, about 10 mm is securely fitted around each pipe. Main pipes 354, too, are fitted in nets 358 so as to prevent foreign matter from plugging air hole 353. Concerning attachment of net 358 to each main pipe 354, however, it is sufficient to wrap the neighborhood of the end closed by cap 352.

Water collecting pipes 356 described above are horizontally arranged at specified intervals and connected through the open ends thereof to main pipes 354 in such a manner that a set of water collecting pipes 356 form tributaries of each main pipe 354.

A treatment layer 361 is formed on water collecting pipes 356 by means of spreading charcoal 360 for retaining microorganism (not shown) therein and having a particle size ranging, for example, from 20 to 50 mm to a thickness of 0.2 to 0.5 m so as to completely cover water collecting pipes 356.

In order to prevent charcoal 360 from floating, a gravel layer 362 is formed on treatment layer 361 by means of spreading river gravel and pebbles to a thickness of, for example, 0.2 to 0.5 m.

In the same manner as the first embodiment shown in Figs. 1 to 6, it is preferred that the cross section of each water collecting pipe 356 is nearly identical to the total area of the apertures of the plurality of irrigation holes 357 of said water collecting pipe 356 and that the cross section of each main pipe 354 is nearly identical to the total of the cross sections of all water collecting pipes 356 which are connected to said main pipe 354. It is also preferable that irrigation holes 357 are bored at intervals identical to the thickness of treatment layer 361.

Next, the process of purification treatment using a purifier according to the twelfth embodiment described above is explained hereunder.

First of all, open first water gates 336 of first and second distributary channels 333/334, close second water gates 337 and adjust third water gate 345 so that the water level of water collecting channel 340 becomes lower than the water level of river 321.

Some volume of water 322 of river 321 then flows through conduit 323 into reservoir tank 325.

After mud and sand contained therein are removed by settling in settling chambers 328, water 322 flows into aeration room 330, where it is supplied oxygen through aeration, and then moves on through outlet port 326 into guide channel 331.

Then, water 322 in guide channel 331 flows through first water gate 336 into first distributary channel 333, then over center walls 348 of first distributary channel 333 into containers 347.

Water 322 which has flowed into each container 347 travels through gravel layer 362, with such refuse as garbage mixed in sewage, dead leaves and insect bodies being removed thereby, and flows into treatment layer 361. Water 322 continues to flow through treatment layer 361, with suspended organic substance and soluble organic substance contained therein being decomposed by microorganisms retained in charcoal 360 of treatment layer 361, and then flows through irrigation holes 357 into water collecting pipes 356. Water 322 which has flowed into water collecting pipes 356 flows on through main pipes 354 into second distributary channels 334/334, from which it moves on through first water gates 336 into water collecting channel 340.

Water 322 which has thus flowed into water collecting channel 340 is dammed up by third water gate 345. As a result, some volume of the water is caused by submerged pump 339 to flow back into first distributary channel 333 through circulation pipe 341, while the remaining water 322 flows over third water gate 345 into discharge channel 343, from which it is discharged by discharge pump 344 to river 321.

As a result of operation of submerged pump 339 and discharge pump 344, the level of water 322 in water collecting channel 340 becomes lower than the water level of river 321, thereby lowering the water level of second distributary channels 334/334. Therefore, as water 322 in containers 347 is caused to flow through gravel layers 362, treatment layers 361, water collecting pipes 356 and main pipes 354 into second distributary channels 334/334, water 322 in reservoir tank 325 flows through first distributary channel 333 into containers. Thus, water 322 is continuously treated.

In the same manner as the first embodiment shown in Figs. 1 to 6, necessary adjustment, such as respectively adjusting the openings of water gates 336/337, controlling the operation of pumps 339/344 and setting the diameters of water collecting pipes 356, irrigation holes 357, main pipes 354 and so forth beforehand, is made so that water 322 flows at approximately 1 ∼ 4 cm/min. through the thickness of treatment layer 361.

In cases where water-bloom and other algae appear near the surface of river 321 or where microorganisms retained in charcoal 360 of treatment layer 361 have excessively grown, close first water gates 336 and open second water gates 337. Then, operate submerged pump 339 and discharge pump 344 so as to cause water 322 in water collecting channel 340 to flow into first distributary channel 333 and also to flow over third water gate 345 into discharge channel 343.

As a result, the water level of water collecting channel 340 is lowered, and water 322 in first distributary channel 333 flows through second water gates 337 into water collecting channel 340. This causes water 322 in containers 347 to flow over center walls 348 of first distributary channel 333 into first distributary channel 333.

As the level of water 322 in containers 347 become consequently lower than the water level of second distributary channels 334/334, water 322 in second distributary channels 334/334 flows into main pipes 354 and water collecting pipes 356 and then, through irrigation holes 357, into treatment layers 361. Then, water 322 flows through treatment layers 361 while removing growth of microorganisms clinging to charcoal 360 of treatment layers 361, with suspended organic substance and soluble organic substance contained in the water being decomposed by microorganisms retained in charcoal 360.

With the configuration as above, wherein, in the same manner as the first embodiment shown in Figs. 1 to 6, microorganisms are retained in charcoal 360, which has extraordinary porosity and very large specific surface area, the present embodiment is capable of increasing the quantity of microorganisms per unit weight of its retaining means and thus improving the efficiency of purification treatment. As charcoal 360 contains elements necessary for biological reaction of microorganisms, such as sodium (Na), potassium (K), calcium (Ca), magnesium (Mg), iron (Fe), copper (Cu) and zinc (Zn), the present embodiment is also effective in retaining microorganisms in good condition and thus improving the efficiency of purification treatment. Further, effective purification is ensured even in case of a river 321 or an irrigation channel which has its banks or river bed covered with concrete and therefore lost virtually all ability of self purification.

Furthermore, as charcoal 360 is inexpensive and has larger pores than those of activated carbon, it is less prone to having its pores blocked by microorganisms retained therein and capable of also capturing tiny living organisms in addition to such microorganisms as bacteria, planktons and various fungi. Therefore, the present embodiment is also capable of providing an inexpensive device with improved efficiency, using the above organisms retained therein.

Should inorganic pesticide which cannot be decomposed by microorganisms or industrial waste which has not been sufficiently treated flow into a river 321 by accident, charcoal 360 is capable of absorbing such undesirable substance and thus protecting the ecosystem of river 321.

Furthermore, as water 322 is aerated in aeration room 330 provided with an aerator, it is possible to secure sufficient oxygen for purification by microorganisms retained in charcoal 360 and perform efficient purification even in case of river 321 where the flow rate is too slow to obtain an ample quantity of dissolved oxygen.

As water 322 is circulated by submerged pump 339 so that water 322 which has already been treated undergoes purification treatment once again, the present embodiment is capable of improving efficiency of purification treatment and also reducing the size of the device.

Although the twelfth embodiment is explained as above referring to the configuration wherein treatment layer 361 is formed by spreading charcoal 360 in each container 347 with water collecting pipes 365 arranged therein, the same effect may by obtained by installing purifying units of any appropriate configuration in the same manner as the seventh embodiment shown in Figs. 17 and 18 or the eleventh embodiment shown in Figs. 24 and 25.

Although discharge pump 339 is provided in discharge channel 343 in the above explanation, the same effect may be obtained by providing a pump 344 in conduit 323 for introducing water 322 thereinto.

Next, a thirteenth embodiment of the present invention is explained hereunder, referring to Figs. 29 to 31.

In Figs. 29 to 31, numeral 371 denotes a body of flowing water which is, in case of the present embodiment, a river. River 371 is provided with a conduit 373 for directing water 372 which is to be treated out of river 371. One end of conduit 373 is open to river 371, and its bed is lower than the water level of river 371 by, for example, about 1 m.

A narrow reservoir channel 374 extending in the direction of the water flow of river 371 is provided at the other end of conduit 373.

An appropriate number of main pipes 376 which are arranged at specified intervals are connected to reservoir channel 374, at positions in the downstream area of reservoir channel 374 where the bed of reservoir channel 374 is higher than the water level of river 371, with the other ends of main pipes 376 open near the bed of river 371.

Numeral 378 denotes a purifying unit comprising a cylindrical outer tube 380 incorporating a unit body 381 and having a plurality of holes 379 bored in its cylindrical surface. In the same manner as a purifying unit 72 having a double-tube structure of the third embodiment shown in Figs. 10 and 11, unit body 381 comprising a tube 383 which is provided with, in the cylindrical surface thereof, a plurality of holes 379 and contains a water collecting pipe 385 which is also provided with, in the cylindrical surface thereof, a plurality of irrigation holes 385 and a net 384 fitted therearound. Purifying unit body 381 is formed into a double-tube structure, with a treatment layer 389 being formed by means of filling the space between tube 383 and water collecting pipe 386 with charcoal 388.

An end of purifying unit 378 is blocked by an end plate 391, and the other end is attached to an annular end plate 393 having a through hole 392 bored near the center of annular end plate 393. Annular end plate 393 is disposed in such a manner that the edge of through hole 392 is flush with the inner edge of the water collecting pipe 386, more precisely the end which is open at an end of purifying unit 381.

In order to prevent purifying unit from floating or being carried away by flow of water 372, a gravel layer 394 is formed by means of filling the space between outer tube 380 and unit body 381 with river gravel and the like having a particle size ranging, for example, from 50 to 100 mm, thus forming purifying unit 378 into a triple-tube structure.

Numeral 396 denotes a connecting unit which comprises the aforementioned triple-tube structure of a purifying unit 378 and is provided with, at both lengthwise ends respectively thereof, annular end plates 393, each of which has a through hole bored near the center. Each annular end plate 393 is disposed in such a manner that the edge of through hole 392 is flush with the inner edge of each end of water collecting pipe 386.

On the bed of river 371, an appropriate number of connecting units 396 are arranged nearly parallel to each other at specified intervals, in such a manner that each connecting unit 396 extends perpendicular to the direction of the stream of river 371, with annular end plate 393 at one of its lengthwise ends connected to the end of corresponding main pipe 376, which is attached to reservoir channel 374. The other annular end plates 393 of connecting units 396, i. e. the end plates which are not connected to main pipes 376, are respectively connected to connecting pipes 397.

Annular end plates 393 of respective purifying units 378 are connected through connecting pipes 397 to connecting units 396 so that each connecting unit 396 is serially connected to purifying unit 378 corresponding thereto in the longitudinal direction.

In the same manner as the first embodiment shown in Figs. 1 to 6, it is preferred that the cross section of each water collecting pipe 386 is nearly identical to the total area of the apertures of the plurality of irrigation holes 384 of said water collecting pipe 386 and that the cross section of main pipe 376 is nearly identical to the total of the cross sections of all water collecting pipes 386 which are connected to said main pipe 376. It is also preferable that irrigation holes 384 are bored at intervals identical to the thickness of treatment layer 389.

A river gravel layer 398 is formed on purifying units 378 and connecting units 396 by means of spreading river gravel and pebbles to a thickness of, for example, 0.3 to 0.5 m, thereby securing purifying units 378 and connecting units 396.

Concerning means of securing purifying unit 378 and connecting units 396, anchors or similar means may be used.

Numeral 400 denotes a reservoir tank which is emplaced downstream from purifying unit 378 and connecting units 396 and formed into a box-like shape, and an inlet port 401 for introducing water 372 of river 371 therethrough is bored in its side wall that faces river 371. Reservoir tank 400 is provided with a submerged pump 403 which serves as means of circulating water and has a circulation pipe 402. An end of circulation pipe 402 is attached to reservoir channel 374.

Next, the process of purification treatment using a purifier according to the thirteenth embodiment described above is explained hereunder.

First of all, some volume of water 372 of river 371 flows through irrigation channel 373 into reservoir channel 374.

Water 372 which has flowed into reservoir channel 374 flows down through main pipes 376, which are attached to reservoir channel 374 at positions higher than the water level of river 371, with water 372 then flowing into water collecting pipes 386 of connecting units 396 and purifying units 378.

When water 372 flows into water collecting pipes 386, the air which has flowed into water collecting pipes 386 together with water 372 is discharged from the air holes, and sand and mud accumulated in water collecting pipes 386 is discharged from the drain holes.

As the water level of reservoir channel 374 is higher than the water level of river 371 in which connecting units 396 and purifying units 378 are disposed, the pressure generated by the difference in the water levels causes water 372 which has flowed into each water collecting pipe 386 to flow from irrigation holes 384 through treatment layer 389, gravel layer 394 and river gravel layer 398 and be discharged into river 371.

In the same manner as the first embodiment shown in Figs. 1 to 6, the diameters of water collecting pipes 386, irrigation holes 384 and so forth, as well as the location for installing reservoir channel 374 are set beforehand so as to cause water 372 to flow at approximately 1 ∼ 4 cm/min. through the thickness of each treatment layer 389.

Water 372 is purified as it flows through treatment layers 389, with suspended organic substance and soluble organic substance being decomposed by microorganisms retained in charcoal 388 of treatment layers 389.

Some volume of water 372 which has been treated and flowed out of purifying units 378 and connecting units 396 flows through inlet port 401 into reservoir tank 400 located downstream from the units. Submerged pump 403 is then operated to cause water 372 to flow through circulation pipe 402 back into reservoir channel 374 to be treated again by purifying units 378 and connecting units 396.

With the configuration as above, wherein, in the same manner as the first embodiment shown in Figs. 1 to 6, microorganisms are retained in charcoal 388, which has extraordinary porosity and very large specific surface area, the present embodiment is capable of increasing the quantity of microorganisms per unit weight of its retaining means and thus improving the efficiency of purification treatment. As charcoal 388 contains elements necessary for biological reaction of microorganisms, such as sodium (Na), potassium (K), calcium (Ca), magnesium (Mg), iron (Fe), copper (Cu) and zinc (Zn), the present embodiment is also effective in retaining microorganisms in good condition and thus improving the efficiency of purification treatment. Further, effective purification is ensured even in case of a river 371 which has its banks or river bed covered with concrete and therefore lost virtually all ability of self purification.

Furthermore, as charcoal 388 has larger pores than those of activated carbon, it is less prone to having its pores blocked by microorganisms retained therein and capable of capturing tiny living organisms in addition to such microorganisms as bacteria, planktons and various fungi, and therefore improving efficiency of purification treatment by using these organisms.

Should inorganic pesticide which cannot be decomposed by microorganisms or industrial waste which has not been sufficiently treated flow into 371 by accident, charcoal 388 is capable of absorbing such undesirable substance and thus protecting the ecosystem of river 371.

According to the present embodiment, a reservoir channel 374 is provided at a position higher than the water level of river 371, and the pressure resulted from the difference in the water levels is used for purification treatment which is performed by means of treatment layers 389, which consists of inexpensive charcoal 388, of purifying units 378 and connecting units 396. Therefore, as the present embodiment does not require a special device, such as a pump, for performing purifying treatment and therefore provides an inexpensive device which has a simple configuration and is capable of easily performing purification treatment at low cost.

As it Is sufficient to form a reservoir channel 374 along a river 371 and arrange purifying units 378 and connecting units 396, each of which is preassembled into a triple-tube structure having gravel layer 395, on the bed of river 371 and connect them through main pipes 376 to reservoir channel 374, the present embodiment is easier to build compared with conventional devices. Furthermore, it does not require a separate site for installation nor damages the environmental beauty which may be otherwise caused by installation of a device outside a river 371.

As water 372 purified by treatment layers 389 is circulated by submerged pump 403 through circulation pipe 402 into reservoir channel 374 and is repeatedly treated by treatment layers 389 of purifying units 378 and connecting units 396, the present embodiment is capable of improving efficiency of purification treatment as well as the clarity of the body of water.

Although the thirteenth embodiment is explained as above referring to the configuration wherein purifying units 378 and connecting units 396 are installed, the same effect may by obtained by forming treatment layer 389 by spreading charcoal 388 and arranging water collecting pipes 386 in the same manner as the fifth embodiment shown in Figs. 14 and 15.

Furthermore, the present embodiment is applicable to any type of body of flowing water, including irrigation channels and canals.

## Claims

1. A purifier having:
a water collecting means having irrigation holes capable of permitting water in a body of water to be treated to flow therethrough;
at least one treatment layer having charcoal for retaining microorganisms, said treatment layer being provided at least on said water collecting means; and
means for circulating said water between the vicinity of the surface and the vicinity of the bottom of said body of water through said water collecting means and said treatment layer.

2. A purifier having:
a water collecting means having irrigation holes capable of permitting water in a body of flowing water to be treated to flow therethrough, said water being caused to flow by the natural force of water flow; and
at least one treatment layer having charcoal for retaining microorganisms, said treatment layer being provided at least on said water collecting means.

3. A purifier having:
at least one weir for blocking the flow of water of a body of flowing water to be treated;
water passage provided through the base of said weir in order to connect the upstream side of said weir to the downstream side thereof, said water passage being provided with irrigation holes through which said flowing water flows; and at least one treatment layer provided with charcoal which covers said irrigation holes and retains microorganisms.

4. A purifier as claimed in claim 2 or claim 3, wherein said purifier includes means for circulating water of a body of flowing water to be treated from downstream of said body of water to upstream thereof.
